(19) **Europäisches Patentamt**
**European Patent Office**
**Office européen des brevets**

(11) **EP 2 885 755 B1**

(12) # EUROPEAN PATENT SPECIFICATION

(45) Date of publication and mention
of the grant of the patent:
**25.09.2019 Bulletin 2019/39**

(51) Int Cl.:
***G06F 9/451*** *(2018.01)*    ***G06F 16/9032*** *(2019.01)*
***G06Q 30/06*** *(2012.01)*    ***G06Q 30/02*** *(2012.01)*

(21) Application number: **14758843.8**

(22) Date of filing: **29.08.2014**

(86) International application number:
**PCT/EP2014/068377**

(87) International publication number:
**WO 2015/028607 (05.03.2015 Gazette 2015/09)**

(54) **AGENT SYSTEM, AGENT CONTROL METHOD AND AGENT CONTROL PROGRAM WITH ABILITY OF NATURAL CONVERSATION WITH USERS**

AGENTENSYSTEM, AGENTENSTEUERUNGSVERFAHREN UND AGENTENSTEUERUNGSPROGRAMM MIT FÄHIGKEIT ZU NATÜRLICHEN GESPRÄCHEN MIT BENUTZERN

SYSTÈME D'AGENT, PROCÉDÉ DE COMMANDE D'AGENT ET PROGRAMME DE COMMANDE D'AGENT, À CAPACITÉ DE CONVERSATION NATURELLE AVEC DES UTILISATEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2013 JP 2013179328**

(43) Date of publication of application:
**24.06.2015 Bulletin 2015/26**

(73) Proprietor: **Accenture Global Services Limited Dublin 4 (IE)**

(72) Inventors:
• **KARASUDANI, Masahiko**
  **Dublin (IE)**
• **SEKI, Kazunori**
  **Dublin (IE)**
• **ARIYOSHI, Yusuke**
  **Dublin (IE)**
• **KAGASAKI, Toshiyuki**
  **Dublin (IE)**
• **NAKAJIMA, So**
  **Dublin (IE)**

(74) Representative: **Müller-Boré & Partner Patentanwälte PartG mbB Friedenheimer Brücke 21 80639 München (DE)**

(56) References cited:
**WO-A1-2012/094519**

• **GUY SHANI ET AL: "Establishing User Profiles in the MediaScout Recommender System", COMPUTATIONAL INTELLIGENCE AND DATA MINING, 2007. CIDM 2007. IEEE SYMP OSIUM ON, IEEE, PI, 1 April 2007 (2007-04-01), pages 470-476, XP031095478, ISBN: 978-1-4244-0705-7**

**Description**

TECHNICAL FIELD

The present invention relates to an agent system, an agent control method, an agent control program, and a recording medium, for providing appropriate advice, proposal, recommendation, etc. (hereinafter collectively referred to as "item") to an individual user, in which yes-or-no questions in a natural language are presented to a user, subsequent questions, which are statistically the most meaningful and effective for the user, are selected based on the answers from the user, and interactive and intellectual conversations with the user are repeated, thereby providing an item appropriate for the circumstances of the individual user.

BACKGROUND ART

GUY SHANI ET AL: "Establishing User Profiles in the MediaScout Recommender System", COMPUTATIONAL INTELLIGENCE AND DATA MINING, 2007, ISBN: 978-1-4244-0705-7, discloses the MediaScout system that is envisioned to function as personalized media (audio, video, print) service within mobile phones, online media portals, sling boxes, etc. The MediaScout recommender engine uses a novel stereotype-based recommendation engine. Upon the registration of new user, the system must decide how to classify the new users to existing stereotypes. The paper presents a method to achieve this classification through an anytime, interactive questionnaire, created automatically upon the generation of new stereotypes. A comparative study performed on IMDB databases illustrates the advantages of the MediaScout system.

In a conventionally known method, a set of yes-or-no questions in a binary tree format is configured in advance, in which a subsequent question is statically associated with a corresponding answer to each question, and a predetermined item is assigned to each leaf of the binary tree. The user is asked questions according to the binary tree, and an appropriate item is recommended to the user through a bisection method interface for asking subsequent questions based on yes-or-no answers to previous questions.

In the bisection method, questions are continued to be asked according to the order of questions associated with the binary tree until a comprehensive set of answers is obtained; for example, when a question "are you sedentary on a daily basis?" is answered with "no", then a subsequent question "are you able to exercise?" is asked.

It can be easily envisaged that such an approach with the bisection method requires many questions to recognize an appropriate item based on the circumstances of the user. However, in a case in which many questions are prepared in consideration of various circumstances, and are statically associated in advance, it is anticipated that a question asked may be out of the context of previous questions and answers from the viewpoint of the user, resulting in an unnatural conversation. For example, if a user is asked a question such as "what genres of book do you like?" following a conversation about drink, the user would be perplexed.

In this way, in the case of the binary tree format, a subsequent question is fixedly associated with a yes-or-no answer from a user; therefore, many questions are required to be presented to the user, leading to a drawback such as questions being boring, irrelevant and time-wasting for the user.

This also involves drawbacks of deteriorating the user experience and the user loyalty.

The binary tree format also has a problem in that maintenance such as inserting new questions and/or items and revising existing questions and/or items is difficult. In other words, in the case of the binary tree format, when adding new items and/or questions or revising existing questions and/or items, the entire binary tree has to be reconfigured, heavily burdening a system administrator.

Furthermore, there have also been problems in that usage history data of many users cannot be flexibly reflected on a binary tree configuration, and that feedback from the usage history data cannot be made more flexibly.

The following Patent Documents 1 to 5 disclose: a technique of searching for a response that matches a question with a response engine including a statement/response database for providing natural conversations with users; a technique of selecting a remedy for a new diagnostic case by calculating a similarity of the new diagnostic case with the past diagnostic cases stored in a database; a technique of selecting a candidate of malfunction from a characteristic value analyzed with a fault detector based on skill data in the past with characteristic values or weighted values stored in a database in a mechanical diagnosis system; a technique of calculating a probability for indicating which cluster a patient belongs to by using a Bayes estimation based on a similarity scale using a Mahalanobis' generalized distance; etc.

Prior Art documents

Patent Documents

Patent Document 1: U.S. Patent No. 7783486
Patent Document 2: Russian Patent Application, Publication No. 2010149779
Patent Document 3: U.S. Patent No. 7206965
Patent Document 4: U.S. Patent No. 6442542
Patent Document 5: European Patent Application, Publication No. 2274699

DISCLOSURE OF THE INVENTION

Problems to be Solved by the Invention

In such a situation, instead of statically associating questions as in the binary tree format, a new system has been desired which is capable of, for example, dynamically and appropriately selecting a subsequent question being most meaningful and effective for a user.

Moreover, a system has been desired, which provides an item more efficiently and promptly without requiring a lot of unnecessary questions, by presenting a user with natural questions within the context of previous question and answers.

It has been desired to improve the user experience and provide a favorable influence enhancing the user loyalty.

A data structure has been desired, which enables flexible maintenance such as adding new items and/or questions as well as revising existing items and/or questions. The data structure has the advantage of enabling more efficiently adding the items and/or questions as well as more efficiently processing existing items and/or questions.

A further improved system has been desired by developing the system to be autonomous by appropriately utilizing and feeding back usage history data accumulated by many users.

The techniques disclosed in Patent Documents 1 to 5 do not solve the above problems.

The present invention has been made in view of such problems, and is aimed at providing an agent system for implementing automated, interactive and natural conversations within the context of previous questions to and answers from the user.

Furthermore, the present invention is aimed at providing an agent system for implementing sessions capable of selecting an item appropriate for a user more promptly and efficiently in comparison with the bisection approach.

The present invention is also aimed at providing a data structure, which enables flexible maintenance such as adding new items and/or questions as well as revising existing items and/or questions. The data structure further has the advantage of enabling more efficiently adding the items and/or questions as well as more efficiently processing existing items and/or questions.

The present invention is further aimed at developing a system to be autonomous by appropriately utilizing and feeding back usage history data accumulated by many users utilizing the system according to the present invention.

As a result, the present invention is aimed at, for example, providing a recommendation appropriate for a user to live a healthy life, by appropriately presenting health-related questions to the user.

The present invention is aimed at being applied to, for example, fashion-related questions and recommendations, food-related questions and recommendations, recreation-related questions and recommendations, career-development-related questions and recommendations, education-related questions and recommendations, etc.

Problems to be Solved by the Invention

The inventors have completed the present invention by finding that statistically meaningful and significant questions and items can be selected by calculating a conditional probability (posterior probability) for a user to agree that an item is true for the user, when questions and items are selected, by applying a Bayes Estimation under a situation where usage history data and previous answers to questions of a user are obtained.

The invention is defined by the appended independent claims. The dependent claims define preferred embodiments.

Effects of the Invention

According to the present invention, by providing automated, interactive and natural conversations within the context of previous questions to and answers from the user, the user experience through utilizing the agent system can be improved, and the user loyalty can be enhanced.

According to the present invention, in comparison with the approach of the standard bisection method, eventually less useful questions can be eliminated, and an appropriate and quickly converged recommendation can be provided to a user more promptly and efficiently.

According to the present invention, even if a user provides an incorrect answer, the user can automatically return to a correct answer by answering other questions.

According to the present invention, the agent system can automatically and autonomously evolve by utilizing user history data of the past. As a result, an appropriate item can be provided to the user.

According to the present invention, flexible maintenance such as adding new items and/or questions as well as revising existing items and/or questions is possible without reconstructing data as in a case of a decision tree model.

BRIEF DESCRIPTION OF THE DRAWINGS

FIG. 1 is a schematic functional block diagram showing an agent system 24 according to an embodiment of the present invention;

FIG. 2A is a conceptual diagram showing an overview of a question table 31 which is included in an item master database 10, according to the embodiment of the present invention;

FIG. 2B is a conceptual diagram showing an overview of an item table 32 which is included in an item master database 10, according to the embodiment of the present invention;

FIG. 2C is a conceptual diagram showing an overview of an item master 33 which is included in an item master database 10, according to the embodiment of the present invention;

FIG. 2D is a conceptual diagram showing an overview of a likelihood-of-question-for-item table 34 which is included in an item master database 10, according to the embodiment of the present invention;

FIG. 3A is a conceptual diagram showing an overview of a user history data file 11 according to the embodiment of the present invention;

FIG. 3B is a conceptual diagram showing an overview of an item probability worktable 12 according to the embodiment of the present invention;

FIG. 4 is a schematic system configuration diagram showing the agent system 24 according to the embodiment of the present invention;

FIG. 5A is a diagram showing examples of a question presentation screen on a client terminal 21 according to the embodiment of the present invention;

FIG. 5B is a diagram showing examples of a question presentation screen on a client terminal 21 according to the embodiment of the present invention;

FIG. 5C is a diagram showing examples of an item presentation screen on a client terminal 21 according to the embodiment of the present invention;

FIG. 6 is a flowchart showing a processing overview of an item master database initial creation according to the embodiment of the present invention;

FIG. 7 is a conceptual diagram showing a functional overview of an item candidate set selection unit 2, a question selection unit 3, a question presentation/answer acquisition unit 4, and an item probability update unit 5, according to the embodiment of the present invention;

FIG. 8 is a conceptual diagram showing an overview of an item probability determination unit 6 and repetitive processing for a case in which an item presentation condition is not satisfied, according to the embodiment of the present invention;

FIG. 9 is a conceptual diagram showing an overview of adding a condition in the question selection unit 3 according to the embodiment of the present invention;

FIG. 10 is a conceptual diagram showing an example of reviving an item in an item candidate set, according to the embodiment of the present invention; and

FIG. 11 is a conceptual diagram showing an overview of processing in each functional unit according to the embodiment of the present invention.

PREFERRED MODE FOR CARRYING OUT THE INVENTION

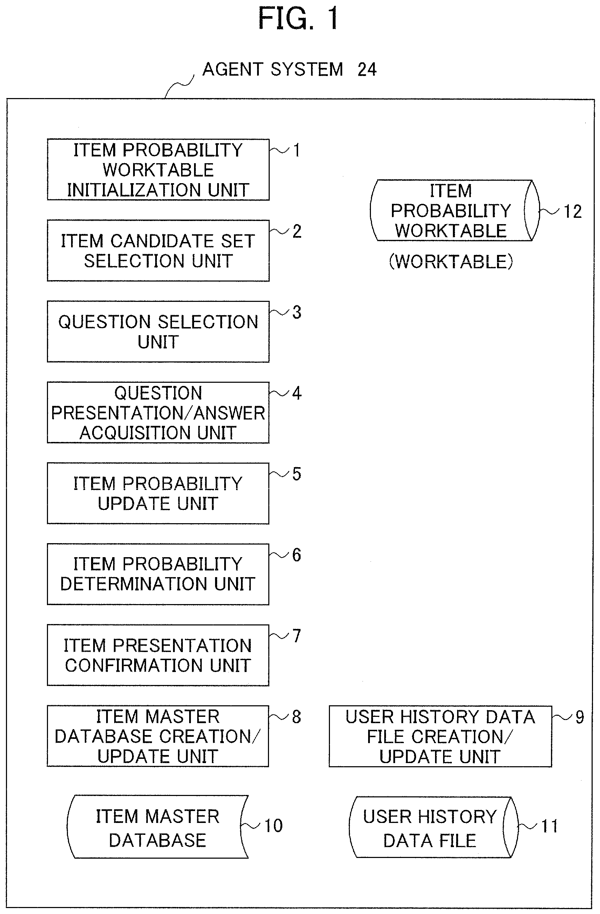

The embodiment of the present invention is hereinafter described in detail with reference to FIGS. 1 to 11 attached herewith.

FIG. 1 shows a schematic functional block diagram of an example of an agent system 24 according to the embodiment of the present invention.

As shown in FIG. 1, the agent system 24 includes an item master database 10, a user history data file 11, an item probability worktable 12, an item master database creation/update unit 8, a user history data file creation/update unit 9, an item probability worktable initialization unit 1, an item candidate set selection unit 2, a question selection unit 3, a question presentation/answer acquisition unit 4, an item probability update unit 5, an item probability determination unit 6, and an item presentation confirmation unit 7.

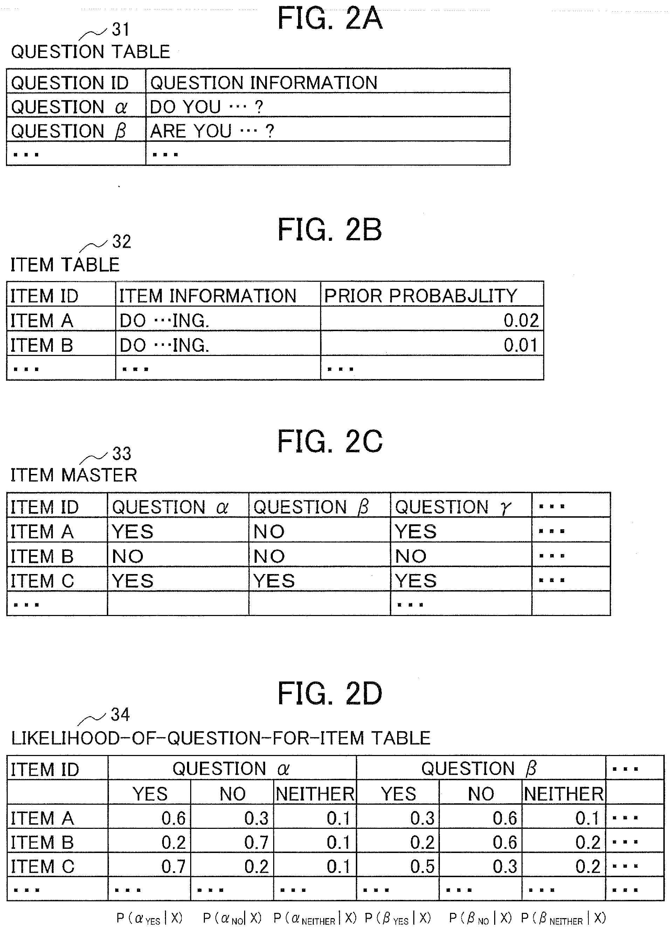

As shown in FIG. 2C, the item master database 10 includes a plurality of questions, a plurality of items, and an item master 33 that is constructed to store and index the questions and the items in association with answers to the questions based on question response data acquired from a plurality of prior users based on the plurality of questions and the plurality of items.

Furthermore, as shown in FIG. 2A, 2B and 2D, the item master database 10 includes: a question table 31 that stores a question ID and question information including contents of the question, for each question of the plurality of questions; an item table 32 that stores an item ID, item information including contents of an item, and a prior probability of the item, for each of the plurality of items; and a likelihood-of-question-for-item table 34 that stores a likelihood of each question for each item, calculated based on the question response data acquired from the plurality of prior users.

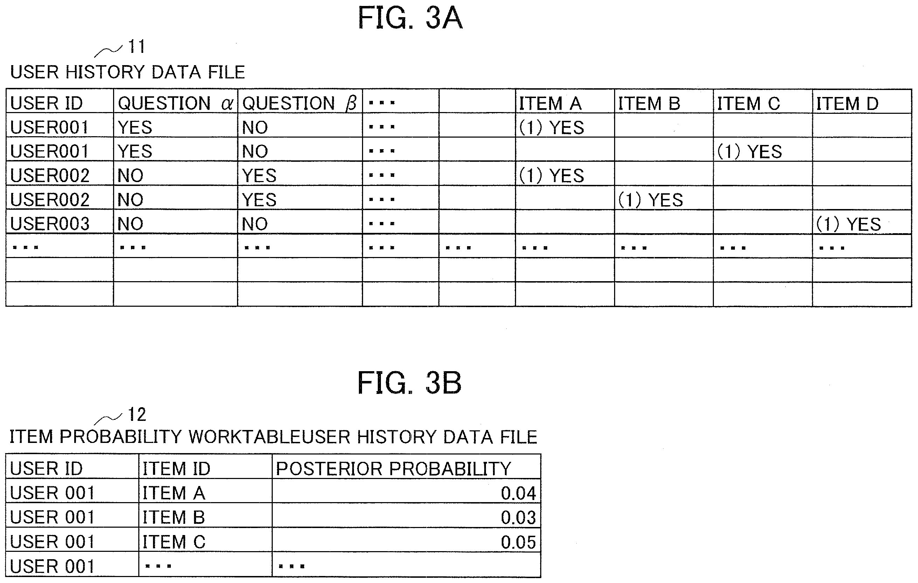

As shown in FIG. 3A, the user history data file 11 is a file that stores user history data record corresponding to each of a plurality of test users and a plurality of prior users. The user history data record is created for each user, and includes question response information including contents of answers by the user to questions, and item information agreed to by the user. As shown in FIG. 3B, the item probability worktable 12 is a worktable including an item ID and a posterior probability of the item for the user at the point in time.

The item probability worktable initialization unit 1 initializes a prior probability of each item in the item probability worktable 12, for all the items. The item probability worktable 12 is a worktable including an item ID and a posterior probability of the item for the user at the point in time.

The item candidate set selection unit 2 selects items in accordance with a first predefined criterion based on the item posterior probability at the point in time stored in the item probability worktable 12, and identifies the selected items as an item candidate set.

The question selection unit 3 selects a question based on a second predefined criterion.

The question presentation/answer acquisition unit 4 presents the question selected by the question selection unit 3, and acquires an answer from the user.

The item probability update unit 5 calculates a posterior probability of each item for the user, based on the answer acquired from the user by the question presentation/answer acquisition unit 4, and updates the item probability worktable 12.

The item probability determination unit 6 determines whether the item probability satisfies a preset condition, by referring to the item probability worktable 12 updated by the item probability update unit 5.

In a case of determining that the condition is satisfied, the control is passed on to the item presentation confirmation unit 7.

In a case of determining that the condition is not satisfied, the processing by the item candidate set selection unit 2, the question selection unit 3, the question presentation/answer acquisition unit 4 and the item probability update unit 5 is repeatedly executed until the item probability updated by the item probability update unit 5 is determined to satisfy the condition.

The item presentation confirmation unit 7 inputs the item information of the item whose item probability is determined to satisfy the condition from the item table 32, inputs the posterior probability of the item from the item probability worktable 12, and edits and outputs output contents relating to the item.

The item master database creation/update unit 8 creates or updates the question table 31, the item table 32, the item master 33, and the likelihood-of-question-for-item table 34, based on an input from a system administrator and the user history data file 11.

The user history data file creation/update unit 9 creates or updates the user history data record corresponding to each user, based on the answer information input by the test users and the prior users, or based on the answer information input by the users using the agent system 24.

Contents of processing by each of the above functional blocks will be described later in detail.

System Configuration

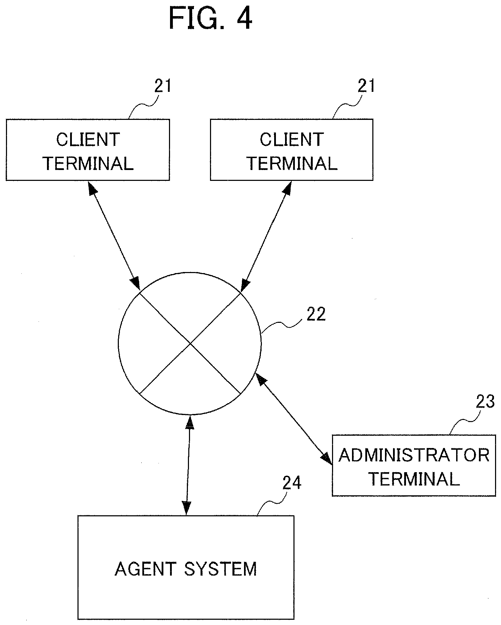

Referring now to FIG. 4, a configuration of the agent system 24 according to the embodiment of the present invention is described. The agent system 24 may include a server. The user converses with the agent system 24 by using a client terminal 21 ordinarily through a communication network 22. The relationship between the client terminal 21 and the server is established based on computer programs executed on respective computers, the programs having a client/server relationship with each other.

The communication network 22 is a wide area network such as a dedicated line, the Internet, a wireless telephone network, a local area network (LAN), or the like.

As another embodiment, the agent system 24 and the client terminal 21 can be deployed on a single computer.

As described above the agent system 24 (computer) is configured to include the item probability worktable 12 initialization unit 1, the item candidate set selection unit 2, the question selection unit 3, the question presentation/answer acquisition unit 4, the item probability update unit 5, the item probability determination unit 6, the item presentation confirmation unit 7, the item master database creation/update unit 8, and the user history data file creation/update unit 9, (hereinafter collectively referred to as "functional unit"), the item master database 10 and the user history data file 11 (hereinafter collectively referred to as "database"), and the item probability worktable 12.

The embodiment of each functional unit of the agent system 24 of the present invention can be implemented as a computer program for execution by a data processor (e.g. a programmable processor, a computer, or a large number of computers), or for controlling operations of the data processor. The embodiment can also be implemented as firmware, a digital electronic circuit, or a combination thereof.

The embodiment of the functional unit can be deployed so as to be executed on a single computer or even on a large number of computers installed in a single place or distributed to several places and interconnected via the communication network 22. The embodiment may be configured by using a plurality of servers or the like in "cloud".

The embodiment of the database of the agent system 24 of the present invention can be implemented as a database server. The embodiment may be configured by using a plurality of servers or the like in "cloud". The item master database 10 and the user history data file 11 are managed with storage means.

For a user's conversation with the agent system 24 implementing the embodiment of the present invention, the embodiment of the client terminal 21 of the present invention can be implemented on a display device and all types of computers having input devices (e.g. a personal computer, a portable terminal, a smartphone, a tablet PC, and a PDA). The client terminal 21 can have a graphical user interface or a Web browser for conversing with the agent system 24. Other types of devices can also be used for implementing a conversation with a user. For example, an output to a user may be in the form of sound or voice, and an input from a user can be received in any form including sound or voice.

The user accesses the agent system 24 by using the client terminal 21, and repeats interactive and intellectual conversations with the agent system 24. As a result for example, a health-related advice, proposal, recommendation, etc. is provided to the user. A system administrator can execute various setting of the agent system 24 by the manager authority by using an administrator terminal 23.

The method steps of the embodiment of the present invention can be executed by a single or plurality of programmable processors that execute a computer program for implementing the functions of the present invention by operating input data to generate an output. The method steps can also be executed by a special purpose logic circuit such as a field programmable gate array (FPGA) or an application specific integrated circuit (ASIC).

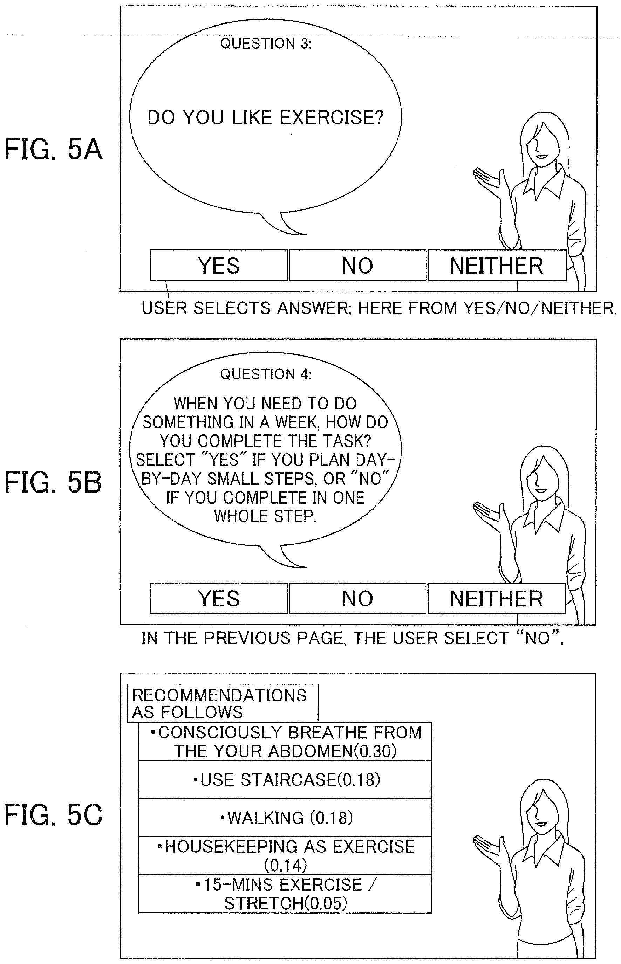

FIG. 5A to 5C show a brief overview of the embodiment of the present invention from the viewpoint of the client terminal 21.

The agent system 24 updates a posterior probability of an item based on answers from a user to first and second questions (not shown in FIG. 5A). Subsequently, the agent system 24 selects a third question and presents it to the user as shown in FIG. 5A.

The user answers "no" to the third question.

FIG. 5B shows a screen, in which the agent system 24 updates the posterior probability of the item, selects a fourth question based on the answer "no" from the user to the third question, and presents the fourth question to the user.

It is assumed herein that the agent system 24 has executed some repetitive processing (not shown), and has determined that the posterior probability of the item satisfies a preset condition.

FIG. 5C shows a screen, in which recommend items are selected and presented to the user.

Here, the numeric characters on the right side of each item indicate values of posterior probabilities of the respective items for the user.

The user is considered to be likely to agree that these items are true for the user.

In this manner, the agent system 24 of the present invention provides automated, interactive and natural conversations within the context of previous questions to and answers from the user. Items appropriate for the user are provided more rapidly and efficiently.

Next, detailed descriptions are provided for contents of processing by the functional unit, and a configuration of the database of the agent system 24. First of all, the configuration of the database is described.

Pre-creation of Item Master Database 10

In order to provide a user with services by the agent system 24 of the present invention, it is necessary to create the item master database 10 in advance. A method of creating the item master database 10 in advance is described herein.

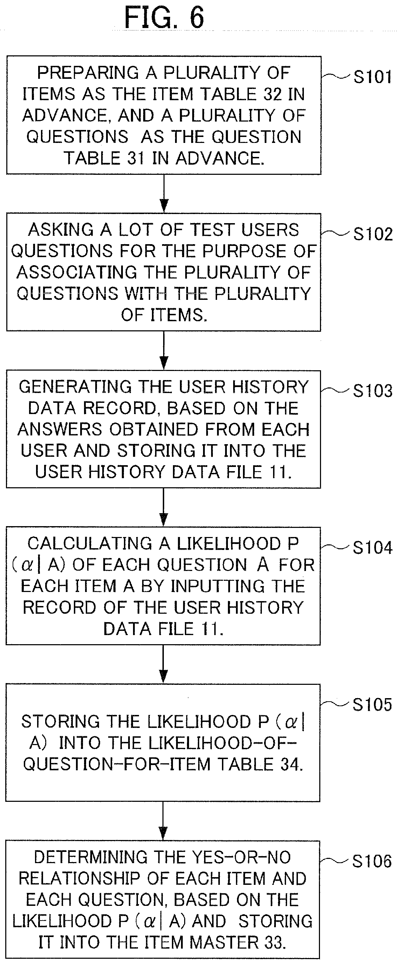

Referring now to FIG. 6, a method of initially creating the item master database 10 is described. First of all, association of items with questions is described, which is a significant feature of the present invention.

As shown in FIG. 2A and 2B, in order to associate items with questions, a plurality of items are prepared as the item table 32 in advance, and a plurality of questions are prepared as the question table 31 in advance (Step 101). By asking a lot of (e.g. 10,000) test users questions for the purpose of associating the plurality of questions with the plurality of items, various data associating the plurality of questions with the plurality of items is acquired (Step 102).

Herein, the test users are asked questions as follows.

Each test user is asked a question $\alpha$. Herein, the question $\alpha$ is a triple-choice question to be answered with any of "yes", "no" or "neither". Each user answers the question $\alpha$ with "yes", "no" or "neither".

An event that a user answered the question $\alpha$ with "yes" is represented as $\alpha_{Yes}$; an event that the user answered the question $\alpha$ with "no" is represented as $\alpha_{No}$; and an event that the user answered the question $\alpha$ with "neither" is represented as $\alpha_{Neither}$.

In other words, when the plurality of users are asked the question $\alpha$, each user will belong to any one of event $\alpha_{Yes}$, $\alpha_{No}$ or $\alpha_{Neither}$.

Subsequently, each user is asked whether a recommendation of an item A is true for the user. The question asking whether the recommendation of the item A is true for the user is an alternative question to be answered with (1) "yes, I would like to do so" or (2) "no". Answers from the users are collected for each item.

The answers from the users can be digitized by using, for example, OCR processing on data sheets. As another example, the answers from the users can be directly collected as electronic data input via a website screen.

The user history data file 11 is a file that records data for each user, as shown in FIG. 3A. This file stores user history data record, recording which one of "yes", "no" or "neither" is answered by each user to the questions, or which one of (1) "yes, I would like to do so" or (2) "no" is answered by each user to the recommendations of items.

The user history data file creation/update unit 9 stores the user history data record shown in FIG. 3A into the user history data file 11, based on the answers obtained from each user (Step 103). Here, the user history record is normalized such that a single record includes only a single item answered with (1) "yes, I would like to do".

Subsequently, the item master database creation/update unit 8 inputs the record including the items answered with (1) "yes, I would like to do so" of the user history data file 11, and calculates for each item, for example, the percentage of the number of record answered with "yes" to the question $\alpha$ in the number of record answered with "yes, I would like to do so" to the recommendation of item A (hereinafter described as P ($\alpha_{Yes}$ | A)).

Similarly, the percentage of the number of record answered with "no" to the question $\alpha$ in the number of record answered with (1) "yes, I would like to do so" to the recommendation of item A is calculated (hereinafter described as P ($\alpha_{No}$ | A)).

Similarly, the percentage of the number of record answered with "neither" to the question $\alpha$ in the number of record answered with (1) "yes, I would like to do so" to the recommendation of item A is calculated (hereinafter described as P ($\alpha_{Neither}$ | A)). The above processing is executed on all items and questions (Step 104).

Herein, P ($\alpha_{Yes}$ | A), P ($\alpha_{No}$ | A) and P ($\alpha_{Neither}$ | A) are referred to as a likelihood of an event $\alpha_{Yes}$ for the item A, a likelihood of an event $\alpha_{NO}$ for the item A, and a likelihood of an event $\alpha_{Neither}$ for the item A, respectively. The above three likelihoods are collectively referred to as a likelihood P ($\alpha$ | A) of the question $\alpha$ for the item A.

For simplicity, it is hereinafter assumed that the likelihood P ($\alpha$ | A) of the question $\alpha$ for the item A means a set of {P ($\alpha_{Yes}$ | A), P ($\alpha_{No}$ | A), and P ($\alpha_{Neither}$ | A)}.

When a user has answered the recommendation of item A with (1) "yes, I would like to do so", the likelihood of the question $\alpha$ for the item A can be considered as follows. P ($\alpha_{Yes}$ | A) is a possibility (likelihood) of the question $\alpha$ having been answered with "yes"; P ($\alpha_{No}$ | A) is a possibility (likelihood) of the question $\alpha$ having been answered with "no"; and similarly, P ($\alpha_{Neither}$ | A) is a possibility (likelihood) of the question $\alpha$ having been answered with "neither".

As will be described later, the likelihood of the question $\alpha$ for the item A is used for calculating a posterior probability of each item, i.e. a conditional probability for a user to agree that each item is true for the user when the answer event occurs, based on a Bayes Estimation after acquiring the answer to the question $\alpha$ from the user.

The item master database creation/update unit 8 stores the calculated likelihood P ($\alpha$ | A) of the question $\alpha$ for the item A into the likelihood-of-question-for-item table 34, as shown in FIG. 2D (Step 105).

Here, association of the item A with the question $\alpha$ is described. Based on the calculated likelihood P ($\alpha$ | A), i.e. P ($\alpha_{Yes}$ | A) and P ($\alpha_{No}$ | A), of the question $\alpha$ for the item A, a yes-or-no relationship of the question $\alpha$ and the item A is defined as follows.

In a case in which a value of P ($\alpha_{Yes}$ | A) is larger than a value of P ($\alpha_{No}$ | A), the question $\alpha$ and the item A are in the Yes relationship. Conversely, in a case in which the value of P ($\alpha_{No}$ | A) is larger than the value of P ($\alpha_{Yes}$ | A), the question $\alpha$ and the item A are in the No relationship.

In a case in which both the values are equal, determination is made in accordance with a predetermined priority order.

As shown in FIG. 6, the item master database creation/update unit 8 stores the yes-or-no relationship of each item and each question into the item master 33, based on the likelihood P ($\alpha$ | A) (Step 106).

For example, with reference to FIG. 2C, it is understood that the question $\alpha$ is in the Yes relationship with the item A, and is in the No relationship with an item B.

As described above, regarding all the items prepared in advance and all the questions prepared in advance, based on the question table 31, the item table 32, and the plurality of questions and items, and based on the data of answers to the plurality of questions obtained from the plurality of prior test users, the agent system 24 indexes yes-or-no relationships in association with each of the plurality of questions, and stores the item master 33, which is indexed in association with each of a plurality of recommendations, and the likelihood-of-question-for-item table 34, into the item master database 10.

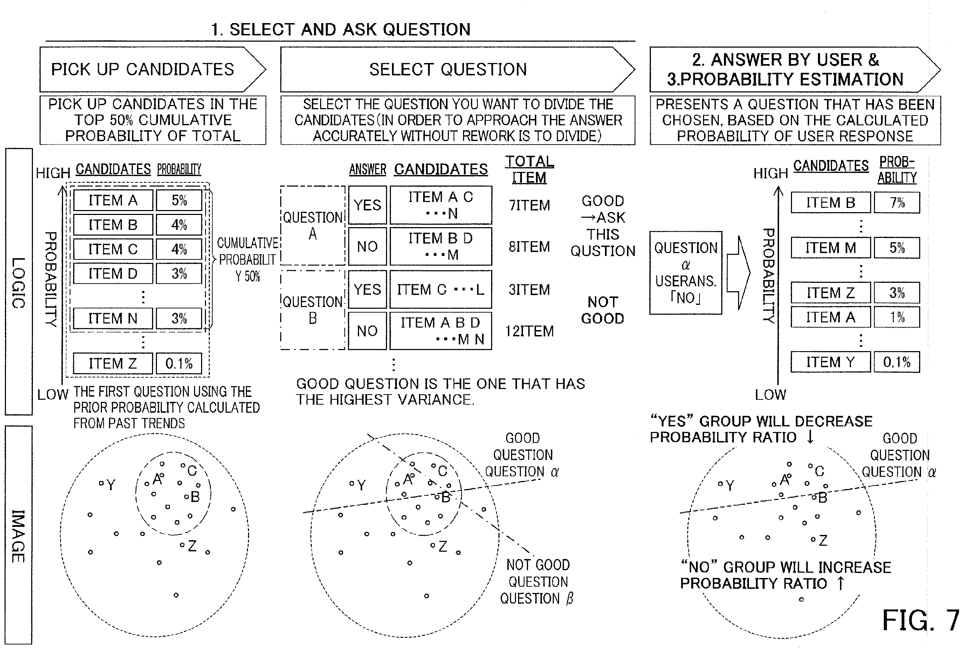

The agent system 24 of the present invention operates based on the item master database 10. Contents of processing by each functional unit of the agent system 24 of the present invention are described with reference to FIGS. 7 to 11.

Calculation of Prior Probability of Each Item

Methods of calculating a prior probability of each item are described.

One method defines that all the items have equal probabilities of being agreed to.

In another method, in a set of users (e.g. 10,000 users), if it is known that each user will agree that some items are true for the user, a prior probability of each item is set based on such data.

In still another method, it is possible to determine a prior probability of each item based on predictions by a service provider, and to provide gradients among the items. The above methods are merely examples, and are not limited thereto.

In any of the above methods, the total sum of the prior probabilities of all the items will be 1 (one) (i.e. 100%).

Initialization of Prior Probability of Item

When the first question is selected for a user, an item candidate set is selected based on preset prior probabilities of items.

Therefore, before the item candidate set selection unit 2 firstly executes processing, the item probability initialization unit initializes the prior probabilities of all the items in the item probability worktable 12, in which the item IDs are associated with the posterior probabilities of the items.

The item probability worktable 12 is a worktable created for each user, for storing posterior probabilities of items calculated each time a question is answered.

Selection of Item Candidate Set, and Selection of Questions

FIG. 7 illustrates processing executed by the item candidate set selection unit 2 and the question selection unit 3 shown in FIG. 1.

FIG. 7 shows contents of processing when the n-th question (n is a natural number of at least one) is selected for a user.

The item candidate set selection unit 2 sorts and cumulatively adds the posterior probabilities of items in descending order of values, which are set in the item probability worktable 12. A plurality of items are selected until immediately before the cumulative sum of the values exceeds a first predefined criterion, and a set consisting of the selected items is used as the n-th item candidate set (n is a natural number of at least one).

Here, the first criterion is, for example, a preset percentage in relation to the sum of the posterior probabilities of all the items, and may be 50%, for example. The first criterion is an arbitrary parameter that is set to the agent system 24 by a system administrator.

The question selection unit 3 automatically selects the n-th question, based on the n-th item candidate set selected by the item candidate set selection unit 2 as follows.

The question selection unit 3 extracts yes-or-no data for associating each question stored in the item master 33 with an item belonging to the n-th item candidate set.

FIG. 7 shows an example of extracting yes-or-no data for items belonging to the item candidate set for the questions $\alpha$ and $\beta$. With reference to FIG. 7, the question $\alpha$ is associated in "YES" with 7 items, and is associated in "NO" with 8 items, among 15 items in the item candidate set. In contrast, the question $\beta$ is associated in "YES" with 3 items, and is associated in "NO" with 12 items, among the 15 items in the item candidate set.

Here, it is assumed arguendo that the question $\alpha$ is presented to the user. If the user answers "Yes", it is supposed that values of the posterior probabilities of the 7 items being associated in "YES" with the question $\alpha$ increase, and that values of the posterior probabilities of the 8 items being associated in "NO" with the question $\alpha$ decrease. Conversely, if the user answers "No", it is supposed that the values of the posterior probabilities of the 8 items being associated in "NO" with the question $\alpha$ increase, and that the values of the posterior probabilities of the 7 items being associated in "YES" with the question $\alpha$ decrease. In other words, regardless of whether the user answers "Yes" or "No", the posterior probabilities of a half of the items in the n-th item candidate set increase, and the posterior probabilities of the other half of the items decrease.

In contrast, it is assumed arguendo that the question $\beta$ is presented to the user. If the user answers "No", it is supposed that values of the posterior probabilities of the 12 items being associated in "NO" with the question $\beta$ increase,

and that values of the posterior probabilities of the 3 items being associated in "YES" with the question β decrease.

In this case, since the posterior probabilities of the 12 items increase, the convergence efficiency of the posterior probabilities of the items is not considered to be "good".

A "good" question is, therefore, preferably the question α that divides the item candidate set into exact halves, in view of the item candidate set in association with Yes and No.

**[0115]** Based on a second predefined criterion to select a question that divides an item candidate set into halves, the question selection unit 3 automatically selects a question that divides the $n^{th}$ item candidate set into halves. This has the technical advantage of a reduced amount of required processing power, since only half of the $n^{th}$ candidate set needs to be considered for further processing. Accordingly, the question selection unit 3 calculates variance of the yes-or-no data for associating each item in the item candidate set with each of the questions stored in the item master. Herein, unbiased variance is used to obtain sample variance.

More specifically, yes-or-no data for associating each item in the item candidate set is input from the item master for each question in the item master; a value of 1 is assigned in a case in which the yes-or-no data is YES, and a value of 0 is assigned in a case in which the yes-or-no data is NO; and unbiased variance of the yes-or-no data in the item candidate set is calculated for the questions.

The unbiased variance is defined by Equation 1.

$$V = (1/N-1) \; \Sigma \; (\mu-Xi)^2 \hspace{4cm} (Eqn.1)$$

where Xi is a value of yes-or-no data of an item that belongs to the item candidate set;
μ is an average of the values of the yes-or-no data of the items that belong to the item candidate set; and
N is a number of items that belong to the item candidate set.

After calculating the unbiased variance of the yes-or-no data in the item candidate set for all the questions, the question selection unit 3 selects a question, which has the largest unbiased variance of the yes-or-no data in the item candidate set among the questions, as a question to be presented to the user.

For example, in the example shown in FIG. 7, the unbiased variance of the question α is 0.266667, and the unbiased variance of question β is 0.171429; therefore, the question α is selected.

In a case in which a plurality of questions have the same unbiased variance of the yes-or-no data in the item candidate set, the question selection unit 3 can further execute the following processing.

Addition of Condition in Selection of Questions

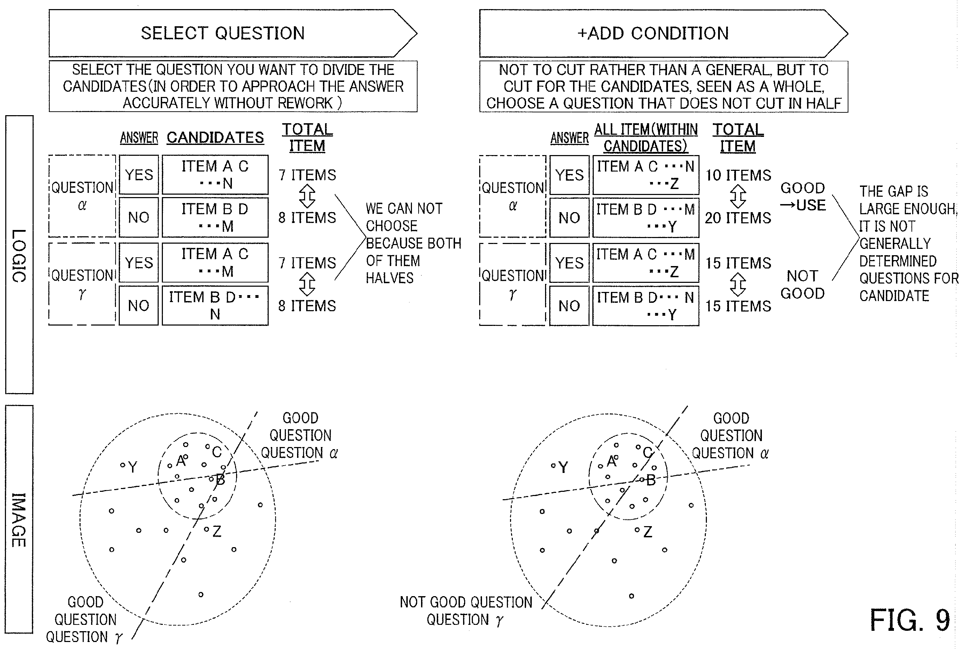

Descriptions are provided with reference to FIG. 9. As shown in FIG. 9, both the questions α and γ divide the item candidate set into halves. However, in view of a universal set of the items, it is understood that the yes-or-no data is deviated to any of YES or NO for the question α. On the other hand, in view of the universal set of the items, it is understood that the yes-or-no data is halved for the question γ.

In this case, it is understood that the question α cuts out a special area from the entirety of the universal set of the items. This suggests that the question α is a question having more special significance for the item candidate set.

Accordingly, in a case in which a plurality of questions have the same unbiased variance of the yes-or-no data in the item candidate set, the question selection unit 3 can execute the following processing based on the second predefined criterion in which another condition is added.

In a case in which a plurality of questions have the same unbiased variance of the yes-or-no data in the item candidate set, the question selection unit 3 inputs yes-or-no data for associating each of the plurality of questions with all the items from the item master 33, and calculates unbiased variance of the yes-or-no data in all the item sets for each question.

After calculating the unbiased variance of the yes-or-no data in the item candidate set for the plurality of question, the question selection unit 3 selects a question having the largest ratio of the unbiased variance of the yes-or-no data of the items belonging to the item candidate set for each question, to the unbiased variance of the yes-or-no data of all the item sets for the question.

As a result, the question selection unit 3 can automatically select more effective questions. In this manner in comparison with the approach of the standard bisection method, eventually less useful questions can be eliminated, and an appropriate and quickly converged recommendation can be provided to a user more promptly and efficiently.

In the example of FIG. 9, the unbiased variance of the yes-or-no data of the items belonging to the item candidate set is 0.266667 for both the questions α and γ. On the other hand, the unbiased variance of the yes-or-no data of the items belonging to all the item sets is 0.229885 for the question α, and is 0.258621 for the question γ. The ratios are calculated as follows.

$$0.266667 / 0.229885 = 1.16 \text{ for the question } \alpha$$

$$0.266667 / 0.258621 = 1.03 \text{ for the question } \gamma$$

Therefore, the question $\alpha$ is selected.

Presentation of Questions, and Acquisition of Answers

The question presentation/answer acquisition unit 4 transmits a question selected by the question selection unit 3 to the client terminal 21 through a communication processing unit (not shown in FIG. 1). The question presentation/answer acquisition unit 4 acquires an answer to the question through the communication processing unit, the answer (e.g. (1) yes, (2) no, or (3) neither) being input from the client terminal 21 by the user.

The question presentation/answer acquisition unit 4 creates/updates user history data record in the user history data file 11 via the user history data file creation/update unit 9, based on the question presented to the user and the answer obtained from the user.

As described above in the system configuration, the client terminal 21 can have a graphical user interface or a Web browser for conversing with the agent system 24. Other types of devices can also be used for implementing a conversation with a user. For example, an output to a user may be in the form of sound or voice, and an input from a user can be received in any form including sound or voice.

Calculation of Item Posterior Probability Based on Answer

FIG. 7 illustrates functions of the item probability update unit 5.

After acquiring an answer from a user to the question $\alpha$, the item probability update unit 5 uses a Bayes Estimation to calculate a probability (posterior probability of item) for the user to agree that the recommendation of the item is true.

Bayes Estimation

A Bayes Estimation is described, prior to describing contents of processing by the item probability update unit 5.

The following is the Bayes Estimation in the present invention.

The prior probability for a user to agree with a recommendation of an item A is assumed herein to be P (A). Under a situation where the user is asked the first question $\alpha$, and an answer "yes" (event $\alpha_{Yes}$), "no" (event $\alpha_{No}$), or "neither" (event $\alpha_{Neither}$) is acquired, conditional probabilities (posterior probabilities) for the user to agree that the recommendation of the item A is true, i.e. P (A | $\alpha_{Yes}$), P (A | $\alpha_{No}$), and P (A | $\alpha_{Neither}$), respectively, are defined by the following Equations 2 to 4 according to a Bayesian theorem.

$$P (A \mid \alpha_{Yes}) = P (\alpha_{Yes} \mid A) P (A) / \Sigma_X \{ P (\alpha_{Yes} \mid X) P (X) \}$$

$$(Eqn.2)$$

where $\Sigma_X$ represents a total sum of all items X; and
P ($\alpha_{Yes}$ | X) represents a likelihood of the event $\alpha_{Yes}$ for an item X.

$$P (A \mid \alpha_{No}) = P (\alpha_{No} \mid A) P (A) / \Sigma_X \{ P (\alpha_{No} \mid X) P (X) \}$$

$$(Eqn.3)$$

where $\Sigma_X$ represents a total sum of all items X; and
P ($\alpha_{No}$ | X) represents a likelihood of the event $\alpha_{No}$ for an item X.

$$P (A \mid \alpha_{Neither}) = P (\alpha_{Neither} \mid A) \, P (A) / \Sigma_X \{ P (\alpha_{Neither} \mid X)$$

$$P (X) \} \qquad\qquad\qquad\qquad (Eqn.4)$$

where $\Sigma_X$ represents a total sum of all items X; and
$P (\alpha_{Neither} \mid X)$ represents a likelihood of the event $\alpha_{Neither}$ for an item X.

When the $n$-th question is presented, and the corresponding $n$-th answer is acquired, the item probability update unit 5 recalculates the $n$-th posterior probability of each item, based on the $(n-1)$-th posterior probability of each item and the $n$-th answer. Similarly, when the $(n+1)$-th question is presented, and the corresponding $(n+1)$-th answer is acquired, the item probability update unit 5 recalculates the $(n+1)$-th posterior probability of each item, based on the $n$-th posterior probability of each item and the $(n+1)$-th answer. As a result, an item with a high posterior probability can be obtained.

The $(n-1)$-th posterior probability of the item A is assumed herein to be $P_{n-1} (A)$. Under a situation where the user is asked the $n$-th question $\beta$, and the corresponding $n$-th answer "yes" (event $\beta_{Yes}$), "no" (event $\beta_{No}$), or "neither" (event $\beta_{Neither}$) is acquired, conditional probabilities (posterior probabilities) for the user to agree that the recommendation of the item A is true, i.e. $P_n (A \mid \beta_{Yes})$, $P_n (A \mid \beta_{No})$, and $P_n (A \mid \beta_{either})$, respectively, are defined by the following Equations 5 to 7 according to the Bayesian theorem.

It should be noted that $P_0 (A) = P (A)$ (prior probability).

$$P_n (A \mid \beta_{Yes}) = P (\beta_{Yes} \mid A) \, P_{n-1} (A) / \Sigma_X \{ P (\beta_{Yes} \mid X) \, P_{n-1}$$

$$(X) \} \qquad\qquad\qquad\qquad (Eqn.5)$$

where $\Sigma_X$ represents a total sum of all items X; and
$P (\beta_{Yes} \mid X)$ represents a likelihood of the event $\beta_{Yes}$ for an item X.

$$P_n (A \mid \beta_{No}) = P (\beta_{No} \mid A) \, P_{n-1} (A) / \Sigma_X \{ P (\beta_{No} \mid X) \, P_{n-1}$$

$$(X) \} \qquad\qquad\qquad\qquad (Eqn.6)$$

where $\Sigma_X$ represents a total sum of all items X; and
$P (\beta_{No} \mid X)$ represents a likelihood of the event $\beta_{No}$ for an item X.

$$P_n (A \mid \beta_{Neither}) = P (\beta_{Neither} \mid A) \, P_{n-1} (A) / \Sigma_X \{ P (\beta_{Neither} \mid$$

$$X) \, P_{n-1} (X) \} \qquad\qquad\qquad\qquad (Eqn.7)$$

where $\Sigma_X$ represents a total sum of all items X; and
$P (\beta_{Neither} \mid X)$ represents a likelihood of the event $\beta_{Neither}$ for an item X.

Item Probability Update Unit 5

Contents of processing by the item probability update unit 5 are described with reference to Equations 2 to 7 as above.

The item probability update unit 5 calculates a conditional probability (posterior probability) for a user to agree that each item is true for the user, based on the answers obtained from the user through the question presentation/answer acquisition unit 4.

More specifically, in a case in which the question $\alpha$ is the first question to the user, based on an answer "yes" (event $\alpha_{Yes}$), "no" (event $\alpha_{No}$), or "neither" (event $\alpha_{Neither}$) from the user, the item probability update unit 5 inputs a likelihood of the question $\alpha$ for each item from the likelihood-of-question-for-item table 34, inputs a prior probability of each item from the item probability worktable 12, and calculates a posterior probability of each item in accordance with Equations 2 to 4. Subsequently, the item probability worktable 12 is updated based on the calculated posterior probability of each item.

In a case in which the question $\beta$ is the $n$-th question to the user (n>1), based on an answer "yes" (event $\beta_{Yes}$), "no" (event $\beta_{No}$), or "neither" (event $\beta_{Neither}$) from the user, the item probability update unit 5 inputs a likelihood of the question $\beta$ for each item from the likelihood-of-question-for-item table 34, inputs a posterior probability of each item from the item probability worktable 12, and calculates an $n$-th posterior probability of each item in accordance with Equations 5 to 7. Subsequently, the item probability worktable 12 is updated based on the calculated $n$-th posterior probability of each item. As another embodiment, the item probability update unit 5 could record an update history to the item probability worktable 12.

As a result, as shown in FIG. 7, for example, in a case in which the answer from the user to the first question $\alpha$ is "no", it is expected that the value of the posterior probability of the item associated with the answer "no" to the question $\alpha$ increases; conversely, the value of the posterior probability of the item associated with the answer "yes" to the question $\alpha$ decreases; and a selection of items, which are agreed to be true for the user, can converge more efficiently.

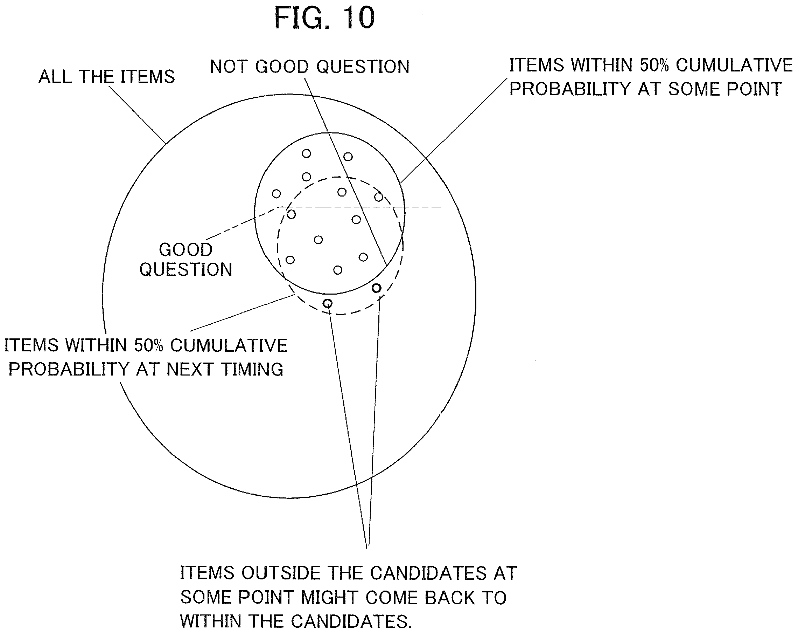

As shown in FIG. 10, an item excluded at a certain point in time from the item candidate set may revive in the item candidate set, depending on the answers to subsequent questions. In other words, according to the function of the item probability update unit 5 of the present invention, even if an incorrect answer is provided to temporarily decrease the value of the posterior probability of the item, correct answers are provided to subsequent questions to increase the value of the posterior probability of the item. As a result, the item candidate set selection unit 2 can reselect the item, which is agreed to be true for the user, as an item in the candidate set. In this manner even if a user provides an incorrect answer, the user can automatically return to a correct answer by answering other questions.

Item Probability Determination Unit 6

The item probability determination unit 6 refers to an item probability stored in the item probability worktable 12, and determines whether the item probability satisfies an item presentation condition which is set in the agent system 24 in advance.

Here, the item presentation condition can be arbitrarily set to the agent system 24 by a system administrator. For example, when the item probabilities stored in the item probability worktable 12 are arranged in descending values, the item presentation condition is a condition whereby the first item probability takes a value at least twice the second item probability, or is a condition whereby the first item probability exceeds 50%, or the like.

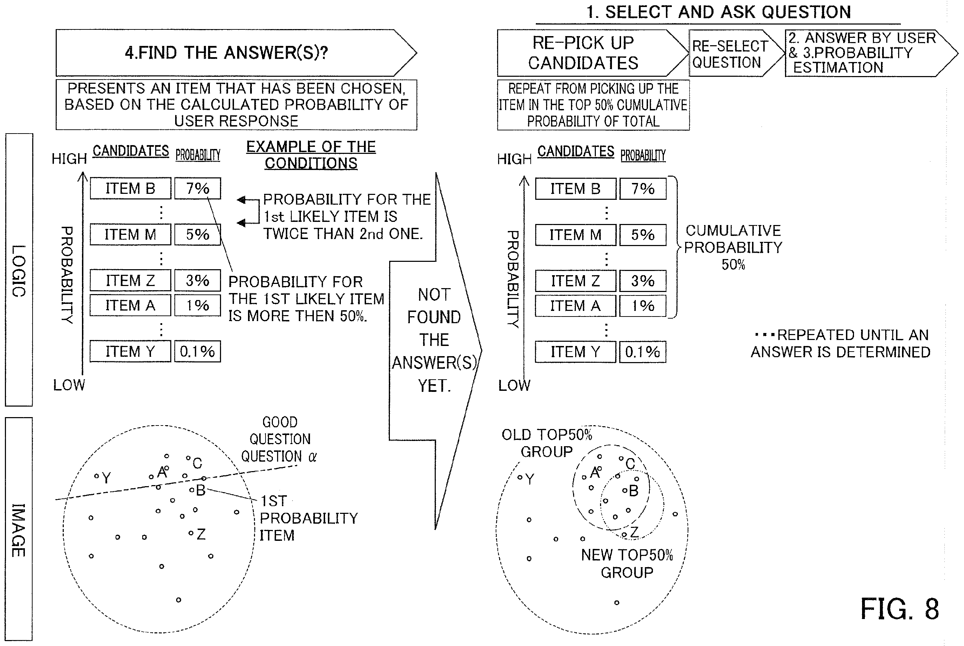

In a case in which the item probability determination unit 6 determines that the item probability stored in the item probability worktable 12 does not satisfy the item presentation condition, as shown in FIG. 8, the processing returns to the item candidate set selection unit 2, the processing is executed again by the item candidate set selection unit 2, the question selection unit 3, the question presentation/answer acquisition unit 4, and the item probability update unit 5, and the item probability determination unit 6 determines again whether the item probability stored in the item probability worktable 12 satisfies the item presentation condition. The above processing is repeated until the item probability determination unit 6 determines that the item probability stored in the item probability worktable 12 satisfies the item presentation condition.

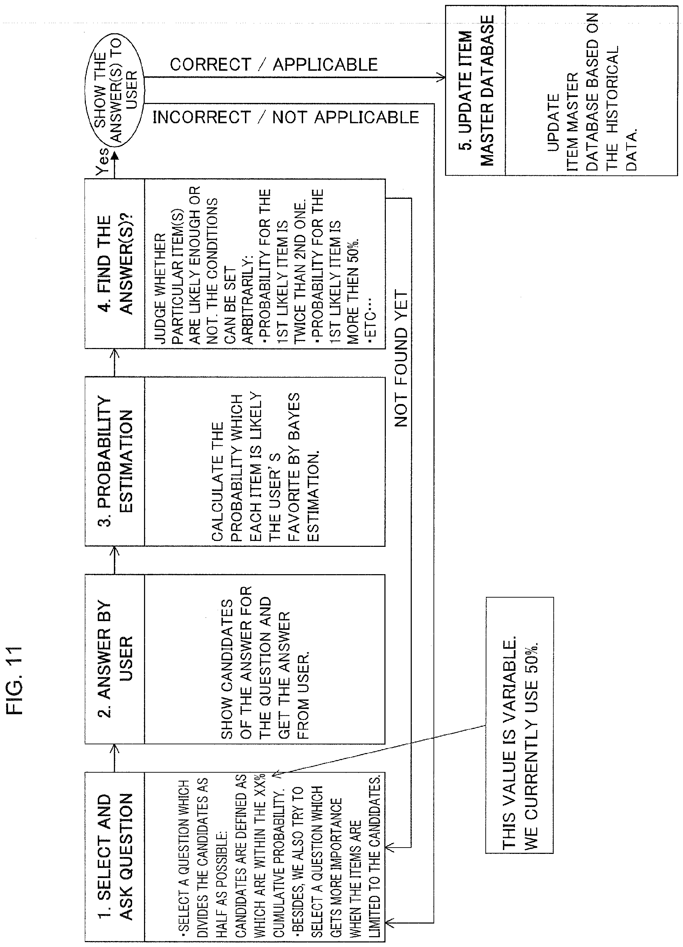

In a case in which the item probability determination unit 6 determines that the item probability stored in the item probability worktable 12 satisfies the item presentation condition, the control is passed on to the item presentation confirmation unit 7, as shown in FIG. 11. The item presentation confirmation unit 7 inputs the item information of the item from the item table 32, inputs the posterior probability of the item from the item probability worktable 12, edits output contents relating to the item, and transmits the output contents to the client terminal 21 through a communication processing unit (not shown in FIG. 1). This has the technical advantage of a reduced amount of required processing power, since only those items satisfying the item presentation condition need to be considered for further processing.

As shown in FIG. 5C, the client terminal 21 displays the item information and the posterior probability of the item presented from the item presentation confirmation unit 7. When the user inputs an answer (not shown in FIG. 5C) as to whether to agree that the presented item is true, the answer is transmitted to the item presentation confirmation unit 7 through the communication processing unit (not shown in FIG. 1) .

In a case in which the item presentation confirmation unit 7 receives answers from the user agreeing that all the recommendations of the presented items are true, the item presentation confirmation unit 7 creates normalized user history data records such that a single record includes only a single item answered with "yes" and stores the user history data records into the user history data file 11, via the user history data file creation/update unit 9.

Subsequently, as shown in FIG. 11, the item master database creation/update unit 8 can update the likelihood-of-question-for-item table 34 shown in the FIG. 2D, based on the updated user history data file 11. The item master database creation/update unit 8 can update the prior probability of the item in the item table 32.

The likelihood-of-question-for-item table 34 and the item table 32 can be updated in real-time or batch processing. Updating the likelihood-of-question-for-item table 34 and item table 32 in real-time has the advantage of providing the user with the most up-to-date recommendations possible.

As a result, when the agent system 24 is operated, the item master database 10 can be automatically maintained based on the history data of the user, and a more up-to-date trend of the user can be reflected. In this manner the agent system 24 can automatically and autonomously evolve by utilizing user history data of the past.

In a case in which the item presentation confirmation unit 7 receives an answer for an item, which is not agreed to be true, from the client terminal 21, as shown in FIG. 11, the processing is executed again by the item candidate set selection unit 2, the question selection unit 3, the question presentation/answer acquisition unit 4, the item probability update unit 5, and the item probability determination unit 6. The above processing is repeated again until the item probability determination unit 6 determines that the item probability stored in the item probability worktable 12 satisfies the item presentation condition. In a case in which the item probability determination unit 6 determines that the item probability stored in the item probability worktable 12 satisfies the item presentation condition, the control is passed on to the item presentation confirmation unit 7 again, as shown in FIG. 11. And the item presentation confirmation unit 7 provides the item information and the posterior probability of the item to the user again.

When the processing is executed again, the item candidate set selection unit 2 removes items not agreed to by the user from the subsequent item candidate set. The item probability update unit 5 can calculate the posterior probabilities of the items by nulling all the likelihoods $P(\alpha \mid A)$ of an arbitrary question $\alpha$ regarding an item that is not agreed to by the user. As a result, in subsequent recalculation of the posterior probabilities, the posterior probability of the item becomes 0%, and will not be presented to the user.

In this manner an inappropriate item can be eliminated, and an appropriate item can be provided to the user.

Other than health-related questions and recommendations, the embodiment of the present invention can be applied to, for example, fashion-related questions and recommendations, food-related questions and recommendations, recreation-related questions and recommendations, career-development-related questions and recommendations, education-related questions and recommendations, etc.

In the above embodiment, a user is asked triple-choice questions to be answered with "yes", "no" or "neither"; however, as an other embodiment 2, a user can be asked alternative questions to be answered with "yes" or "no". The other embodiment 2 can be implemented by interpreting the above embodiment such that the event $\alpha_{Neither}$ and the event $\beta_{Neither}$ do not exist.

In the above embodiment, an answer to the recommendation of the item A is selected from alternative answers of (1) "yes" (I would like to do so) or (2) "no" (I would not like to do so). However, as another embodiment 3, an answer can be selected from triple-choice answers of (1) "yes" (I would like to do so), (2) "no" (I would not like to do so), or (3) "neither"; or as still another embodiment, an answer can be selected from quadruple-choice answers of (1) "I have already done so" (2) "yes, I would like to do so", (3) "no", or (4) "neither".

Accordingly, to provide an agent system and an agent control method for providing appropriate advice, proposals, recommendations, etc. to individual users, the system and computer program product (particularly embodied as a computer-readable storage medium, as a signal and/or as a data stream) executes and the method includes the steps of: storing, into a database, a plurality of question response data acquired from a plurality of prior users, wherein the plurality of question response data is indexed in association with each of a plurality of questions and in association with each of a plurality of recommendations; identifying a set of candidate recommendations from the plurality of recommendations based on a first predefined criterion; repeating a sub-method until determining that a predefined condition is satisfied, the sub-method including the steps of selecting a question from the database based on a second predefined criterion, acquiring an answer from the user to the question selected in the step of selecting a question, updating probabilities of all the recommendations for the user based on the answer from the user, and updating the set of candidate recommendations based on the updated probabilities of the recommendations; and outputting a recommendation selected from the set of candidate recommendations, in a case of determining that the predefined condition is satisfied.

The configurations and operations of the above embodiments are examples, and it will be obvious to a person skilled in the art that appropriate alterations can be made without departing from the scope of the present invention, which is defined by the appended claims.

EXPLANATION OF REFERENCE NUMERALS

1     item probability worktable initialization unit
2     item candidate set selection unit
3     question selection unit
4     question presentation/answer acquisition unit
5     item probability update unit
6     item probability determination unit
7     item presentation confirmation unit
8     item master database creation/update unit

9       user history data file creation/update unit
10      item master database
11      user history data file
12      item probability worktable
21      client terminal
22      communication network
23      administrator terminal
24      agent system
31      question table
32      item table
33      item master
34      likelihood-of-question-for-item table

**Claims**

1. A computer-implemented method for providing a recommendation to a user by an automated system (24) having interactive conversations with the user, wherein a processor executes the method comprising the steps of:

> storing, into a database (10, 11), a plurality of question response data acquired from a plurality of prior users, wherein the plurality of question response data is indexed in association with each of a plurality of questions and in association with each of a plurality of recommendations, wherein an item master database (10) includes the plurality of questions, a plurality of items, and an item master (33) that is constructed to store and index the questions and the items in association with answers to the questions based on question response data acquired from the plurality of prior users based on the plurality of questions and the plurality of items, and wherein a user history data file (11) stores user history data record corresponding to each of a plurality of test users and the plurality of prior users;
> identifying a set of candidate recommendations from the plurality of recommendations based on a first predefined criterion;
> repeating a sub-method until determining that a predefined condition is satisfied, the sub-method including the steps of:
>
> > - selecting a question from the database (10, 11) based on a second predefined criterion,
> > - acquiring an answer from the user to the question selected in the step of selecting a question,
> > - updating probabilities of all the recommendations for the user based on the answer from the user, wherein updating probabilities of all the recommendations based on the answer from the user includes a Bayes Estimation, and
> > - updating the set of candidate recommendations based on the updated probabilities of the recommendations; and
>
> outputting a recommendation selected from the set of candidate recommendations, in a case of determining that the predefined condition is satisfied.

2. The computer-implemented method according to claim 1, wherein the sub-method further includes updating the question response data based on the answer from the user by updating the user data file (11).

3. The computer-implemented method according to claim 1 or claim 2, wherein the predefined condition includes that a probability of a first recommendation candidate is equal to or more than a predetermined integral multiple of a probability of a second recommendation candidate.

4. The computer-implemented method according to any one of claims 1 to 3, wherein the first predefined criterion is to identify a set composed of recommendations by cumulatively adding recommendations in descending order of probabilities of recommendations until a cumulative sum becomes a predetermined percentage of a total sum.

5. The computer-implemented method according to any one of claims 1 to 4, wherein the second predefined criterion is to select a question having highest unbiased variance or variance of answers in the set of candidate recommendations.

6. The computer-implemented method according to any one of claims 1 to 5, wherein, in a case in which a plurality of questions have the same highest unbiased variance or variance of answers in the set of candidate recommendations, the second predefined criterion is to select a question having a highest ratio of the unbiased variance or variance of answers in the set of candidate recommendations to unbiased variance or variance of answers in all sets of recommendations.

7. The computer-implemented method according to any one of claims 1 to 6, wherein the database (10, 11) is updated in real-time; and/or
wherein selecting a question from the database (10, 11) based on a second predefined criterion comprises automatically selecting a question that divides the set of candidate recommendations into halves.

8. The computer-implemented method according to any one of claims 1 to 7, wherein acquiring an answer from the user to the question comprises:

selecting, by a question selection unit, a question; and
transmitting, by a question presentation/answer acquisition unit, the selected question to the user through a communication processing unit, wherein the question presentation/answer acquisition unit is further operable to acquire an answer to the selected question through the communication processing unit.

9. The computer-implemented method according to any one of claims 1 to 8, wherein updating probabilities comprises calculating a posterior probability for each recommendation of the set of candidate recommendations based on the answer from the user.

10. The computer-implemented method according to claim 9, wherein updating the set of candidate recommendations comprises determining an updated probability for each recommendation of the set of candidate recommendations; wherein outputting the recommendation may comprise outputting the recommendations of the set of candidate recommendations having an updated probability below a predetermined threshold value.

11. A computer system for providing a recommendation to a user by an automated system (24) having interactive conversations with the user, the computer system comprising:

a memory storing processor-executable program code; and
a processor to execute the processor-executable program code to cause the system to execute the processor-executable program code to cause the computer system to:

store, into a database (10, 11), a plurality of question response data acquired from a plurality of prior users, wherein the plurality of question response data is indexed in association with each of a plurality of questions and in association with each of a plurality of recommendations, wherein an item master database (10) includes the plurality of questions, a plurality of items, and an item master (33) that is constructed to store and index the questions and the items in association with answers to the questions based on question response data acquired from the plurality of prior users based on the plurality of questions and the plurality of items, and wherein a user history data file (11) stores user history data record corresponding to each of a plurality of test users and the plurality of prior users;
identify a set of candidate recommendations from the plurality of recommendations based on a first predefined criterion;
repeat a plurality of means until determining that a predefined condition is satisfied, the plurality of means including:

- select a question from the database (10, 11) based on a second predefined criterion,
- acquire an answer from the user to the question selected by the means for selecting a question,
- update probabilities of all the recommendations for the user based on the answer from the user, and
- update the set of candidate recommendations based on the updated probabilities of the recommendations, wherein updating probabilities of all the recommendations based on the answer from the user includes a Bayes Estimation; and

output a recommendation selected from the set of candidate recommendations, in a case of determining that the predefined condition is satisfied.

**12.** A computer program product comprising computer readable instructions which when loaded and executed on a suitable system, perform the steps of a method for providing a recommendation to a user by an automated system (24) according to any one of the preceding claims 1 to 10.

**Patentansprüche**

**1.** Computerimplementiertes Verfahren zum Bereitstellen einer Empfehlung an einen Anwender durch ein automatisiertes System (24), welches interaktive Konversationen mit dem Anwender führt, wobei ein Prozessor das Verfahren ausführt, welches die folgenden Schritte umfasst:

Speichern, in eine Datenbank (10, 11), einer Vielzahl von Frage-Antwort-Daten, welche von einer Vielzahl von vorherigen Anwendern erfasst worden sind, wobei die Vielzahl von Frage-Antwort-Daten in Assoziation mit jeder einer Vielzahl von Fragen und in Assoziation mit jeder einer Vielzahl von Empfehlungen indiziert ist, wobei eine Element-Master-Datenbank (10) die Vielzahl von Fragen, eine Vielzahl von Elementen und einen Element-Master (33) enthält, welcher aufgebaut ist zum Speichern und Indizieren der Fragen und der Elemente in Assoziation mit Antworten auf die Fragen, basierend auf Frage-Antwort-Daten, welche von der Vielzahl von vorherigen Anwendern erfasst worden sind, basierend auf der Vielzahl von Fragen und der Vielzahl von Elementen und wobei eine Anwenderhistorie-Datei (11) einen Anwenderhistorie-Datensatz entsprechend jedem einer Vielzahl von Test-Anwendern und der Vielzahl von vorherigen Anwendern speichert;
Identifizieren eines Satzes möglicher Empfehlungen aus der Vielzahl von Empfehlungen, basierend auf einem ersten vordefinierten Kriterium;
Wiederholen eines Unterverfahrens bis zum Feststellen, dass eine vordefinierte Bedingung erfüllt ist, wobei das Unterverfahren die folgenden Schritte umfasst:

- Wählen einer Frage aus der Datenbank (10, 11), basierend auf einem zweiten vordefinierten Kriterium,
- Erfassen einer Antwort von dem Anwender auf die in dem Schritt des Wählens einer Frage gewählte Frage,
- Aktualisieren von Wahrscheinlichkeiten aller Empfehlungen für den Anwender, basierend auf der Antwort von dem Anwender, wobei das Aktualisieren von Wahrscheinlichkeiten aller Empfehlungen basierend auf der Antwort von dem Anwender eine Bayes-Schätzung enthält, und
- Aktualisieren des Satzes möglicher Empfehlungen basierend auf den aktualisierten Wahrscheinlichkeiten der Empfehlungen; und

Ausgeben einer aus dem Satz möglicher Empfehlungen gewählten Empfehlung bei Feststellen, dass die vordefinierte Bedingung erfüllt ist.

**2.** Computerimplementiertes Verfahren nach Anspruch 1, wobei das Unterverfahren ferner das Aktualisieren der Frage-Antwort-Daten basierend auf der Antwort von dem Anwender durch Aktualisieren der Anwenderdatei (11) enthält.

**3.** Computerimplementiertes Verfahren nach Anspruch 1 oder Anspruch 2, wobei die vordefinierte Bedingung enthält, dass eine Wahrscheinlichkeit einer ersten Empfehlungsmöglichkeit gleich einem oder größer als ein vorgegebenes ganzzahliges Vielfaches einer Wahrscheinlichkeit einer zweiten Empfehlungsmöglichkeit ist.

**4.** Computerimplementiertes Verfahren nach einem der Ansprüche 1 bis 3, wobei das erste vordefinierte Kriterium ist, einen aus Empfehlungen bestehenden Satz zu definieren, durch kumulatives Addieren von Empfehlungen in absteigender Reihenfolge der Wahrscheinlichkeiten von Empfehlungen, bis eine kumulative Summe ein vorgegebener Anteil einer Gesamtsumme wird.

**5.** Computerimplementiertes Verfahren nach einem der Ansprüche 1 bis 4, wobei das zweite vordefinierte Kriterium ist, eine Frage zu wählen, welche höchste erwartungstreue Varianz oder Varianz von Antworten in dem Satz möglicher Empfehlungen hat.

**6.** Computerimplementiertes Verfahren nach einem der Ansprüche 1 bis 5, wobei, in einem Fall, in dem eine Vielzahl von Fragen die gleiche höchste erwartungstreue Varianz oder Varianz von Antworten in dem Satz möglicher Empfehlungen hat, das zweite vordefinierte Kriterium ist, eine Frage zu wählen, welche ein höchstes Verhältnis der erwartungstreuen Varianz oder Varianz von Antworten in dem Satz möglicher Empfehlungen zu erwartungstreuer Varianz oder Varianz von Antworten in allen Sätzen möglicher Empfehlungen hat

7.  Computerimplementiertes Verfahren nach einem der Ansprüche 1 bis 6, wobei die Datenbank (10, 11) in Echtzeit aktualisiert wird; und/oder
    wobei das Wählen einer Frage aus der Datenbank (10, 11) basierend auf einem zweiten vordefinierten Kriterium das automatische Wählen einer Frage umfasst, welche den Satz möglicher Empfehlungen halbiert.

8.  Computerimplementiertes Verfahren nach einem der Ansprüche 1 bis 7, wobei das Erfassen einer Antwort von dem Anwender auf die Frage umfasst:

    Wählen, durch eine Frage-Wähleinheit, einer Frage; und
    Übertragen, durch eine Einheit zum Stellen von Fragen/Erfassen von Antworten, der gewählten Frage durch eine Kommunikationsverarbeitungseinheit an den Anwender, wobei die Einheit zum Stellen von Fragen/Erfassen von Antworten ferner zum Erfassen einer Antwort auf die gewählte Frage durch die Kommunikationsverarbeitungseinheit betätigbar ist.

9.  Computerimplementiertes Verfahren nach einem der Ansprüche 1 bis 8, wobei das Aktualisieren von Wahrscheinlichkeiten das Berechnen einer A-Posteriori-Wahrscheinlichkeit für jede Empfehlung des Satzes möglicher Empfehlungen basierend auf der Antwort von dem Anwender umfasst.

10. Computerimplementiertes Verfahren nach Anspruch 9, wobei das Aktualisieren des Satzes möglicher Empfehlungen das Bestimmen einer aktualisierten Wahrscheinlichkeit für jede Empfehlung des Satzes möglicher Empfehlungen umfasst;
    wobei das Ausgeben der Empfehlung das Ausgeben der Empfehlungen des Satzes möglicher Empfehlungen, welche eine aktualisierte Wahrscheinlichkeit unterhalb eines vorgegebenen Schwellenwertes haben, umfassen kann.

11. Computersystem zum Bereitstellen einer Empfehlung an einen Anwender durch ein automatisiertes System (24), welches interaktive Konversationen mit dem Anwender führt, wobei das Computersystem umfasst:

    einen Speicher, welcher durch einen Prozessor ausführbaren Programmcode speichert; und
    einen Prozessor, welcher den durch einen Prozessor ausführbaren Programmcode ausführt, um das System zu veranlassen, den durch einen Prozessor ausführbaren Programmcode auszuführen, um das Computersystem zu veranlassen:

    in eine Datenbank (10, 11) eine Vielzahl von Frage-Antwort-Daten zu speichern, welche von einer Vielzahl von vorherigen Anwendern erfasst worden sind, wobei die Vielzahl von Frage-Antwort-Daten in Assoziation mit jeder einer Vielzahl von Fragen und in Assoziation mit jeder einer Vielzahl von Empfehlungen indiziert ist, wobei eine Element-Master-Datenbank (10) die Vielzahl von Fragen, eine Vielzahl von Elementen und einen Element-Master (33) enthält, welcher aufgebaut ist zum Speichern und Indizieren der Fragen und der Elemente in Assoziation mit Antworten auf die Fragen, basierend auf Frage-Antwort-Daten, welche von der Vielzahl von vorherigen Anwendern erfasst worden sind, basierend auf der Vielzahl von Fragen und der Vielzahl von Elementen und wobei eine Anwenderhistorie-Datei (11) einen Anwenderhistorie-Datensatz entsprechend jedem einer Vielzahl von Test-Anwendern und der Vielzahl von vorherigen Anwendern speichert;
    einen Satz möglicher Empfehlungen aus der Vielzahl von Empfehlungen basierend auf einem ersten vordefinierten Kriterium zu identifizieren;
    eine Vielzahl von Mitteln zu wiederholen, bis zum Feststellen, dass eine vordefinierte Bedingung erfüllt ist, wobei die Vielzahl von Mitteln enthält:

    - Wählen einer Frage aus der Datenbank (10, 11), basierend auf einem zweiten vordefinierten Kriterium,
    - Erfassen einer Antwort von dem Anwender auf die in dem Schritt des Wählens einer Frage gewählte Frage,
    - Aktualisieren von Wahrscheinlichkeiten aller Empfehlungen für den Anwender, basierend auf der Antwort von dem Anwender, und
    - Aktualisieren des Satzes möglicher Empfehlungen basierend auf den aktualisierten Wahrscheinlichkeiten der Empfehlungen, wobei das Aktualisieren von Wahrscheinlichkeiten aller Empfehlungen basierend auf der Antwort von dem Anwender eine Bayes-Schätzung enthält; und

    Ausgeben einer aus dem Satz möglicher Empfehlungen gewählten Empfehlung bei Feststellen, dass die vordefinierte Bedingung erfüllt ist.

**12.** Computerprogrammprodukt, umfassend computerlesbare Befehle, welche, wenn sie auf einem geeigneten System geladen sind und ausgeführt werden, die Schritte eines Verfahrens zum Bereitstellen einer Empfehlung an einen Anwender durch ein automatisiertes System (24) nach einem der vorhergehenden Ansprüche 1 bis 10 ausführen.

**Revendications**

**1.** Un procédé mis en oeuvre par ordinateur pour fournir une recommandation à un utilisateur par un système automatisé (24) ayant des conversations interactives avec l'utilisateur, sachant qu'un processeur exécute le procédé comprenant les étapes consistant à :

stocker, dans une base de données (10, 11), une pluralité de données de réponse de question (*question response data*) acquises à partir d'une pluralité d'utilisateurs antérieurs, sachant que la pluralité de données de réponse de question est indexée en association avec chacune d'une pluralité de questions et en association avec chacune d'une pluralité de recommandations, sachant qu'une base de données de fichier maître (*item master database*) (10) inclut la pluralité de questions, une pluralité d'articles, et un fichier maître (33) qui est construit pour stocker et indexer les questions et les articles en association avec des réponses aux questions sur la base de données de réponse de question acquises à partir de la pluralité d'utilisateurs précédents sur la base de la pluralité de questions et de la pluralité d'articles, et sachant qu'un fichier de données d'historique utilisateur (11) stocke un jeu de données (*data record*) d'historique utilisateur correspondant à chacun parmi une pluralité d'utilisateurs test et à la pluralité d'utilisateurs antérieurs ;
identifier un ensemble de recommandations candidates à partir de la pluralité de recommandations sur la base d'un premier critère prédéfini ;
répéter un sous-procédé jusqu'à ce qu'il soit déterminé qu'une condition prédéfinie est remplie, le sous-procédé incluant les étapes consistant à :

- sélectionner une question depuis la base de données (10, 11) sur la base d'un deuxième critère prédéfini,
- acquérir une réponse de l'utilisateur à la question sélectionnée dans l'étape de sélection d'une question,
- mettre à jour des probabilités de toutes les recommandations pour l'utilisateur sur la base de la réponse de l'utilisateur, sachant que la mise à jour des probabilités de toutes les recommandations sur la base de la réponse de l'utilisateur comprend une estimation de Bayes, et à
- mettre à jour l'ensemble des recommandations candidates sur la base des probabilités actualisées des recommandations ; et à

émettre une recommandation sélectionnée parmi l'ensemble des recommandations candidates, dans le cas où l'on détermine que la condition prédéfinie est satisfaite.

**2.** Le procédé mis en oeuvre par ordinateur d'après la revendication 1, sachant que le sous-procédé comprend en outre la mise à jour des données de réponse de question sur la base de la réponse de l'utilisateur en mettant à jour le fichier de données d'utilisateur (11).

**3.** Le procédé mis en oeuvre par ordinateur d'après la revendication 1 ou la revendication 2, sachant que la condition prédéfinie inclut qu'une probabilité d'une première recommandation candidate est égale ou supérieure à un multiple entier prédéterminé d'une probabilité d'une deuxième recommandation candidate.

**4.** Le procédé mis en oeuvre par ordinateur d'après l'une quelconque des revendications de 1 à 3, sachant que le premier critère prédéfini vise à identifier un ensemble composé de recommandations par l'ajout cumulatif de recommandations dans un ordre décroissant de probabilités de recommandations jusqu'à ce qu'une somme cumulative devienne un pourcentage prédéterminé d'une somme totale.

**5.** Le procédé mis en oeuvre par ordinateur d'après l'une quelconque des revendications de 1 à 4, sachant que le deuxième critère prédéfini vise à sélectionner une question ayant la variance sans biais ou la variance de réponses la plus élevée dans l'ensemble de recommandations candidates.

**6.** Le procédé mis en oeuvre par ordinateur d'après l'une quelconque des revendications de 1 à 5, sachant que, dans le cas où plusieurs questions présentent la même variance sans biais ou variance de réponses la plus élevée dans l'ensemble de recommandations candidates, le deuxième critère prédéfini vise à sélectionner une question ayant un rapport le plus élevé de la variance sans biais ou de la variance des réponses dans l'ensemble de recommandations candidates sur la variance sans biais ou la variance des réponses dans tous les ensembles de recommandations.

7. Le procédé mis en oeuvre par ordinateur d'après l'une quelconque des revendications de 1 à 6, sachant que la base de données (10, 11) est mise à jour en temps réel ; et/ou
sachant que le fait de sélectionner une question depuis la base de données (10, 11) sur la base d'un deuxième critère prédéfini comprend le fait de sélectionner automatiquement une question qui divise l'ensemble des recommandations candidates en deux.

8. Le procédé mis en oeuvre par ordinateur d'après l'une quelconque des revendications de 1 à 7, sachant que le fait d'acquérir une réponse depuis l'utilisateur à la question comprend le fait de :

sélectionner, par une unité de sélection des questions, une question ; et de
transmettre, par l'intermédiaire d'une unité de présentation de question / d'acquisition de réponse, la question sélectionnée à l'utilisateur par l'intermédiaire d'une unité de traitement de communication, sachant que l'unité de présentation de questions / d'acquisition de réponse est en outre utilisable pour acquérir une réponse à la question sélectionnée par l'intermédiaire de l'unité de traitement de communication.

9. Le procédé mis en oeuvre par ordinateur d'après l'une quelconque des revendications de 1 à 8, sachant que le fait de mettre à jour les probabilités comprend le fait de calculer une probabilité a posteriori pour chaque recommandation de l'ensemble de recommandations candidates sur la base de la réponse de l'utilisateur.

10. Le procédé mis en oeuvre par ordinateur d'après la revendication 9, sachant que le fait de mettre à jour l'ensemble des recommandations candidates comprend le fait de déterminer une probabilité actualisée pour chaque recommandation de l'ensemble des recommandations candidates ;
sachant que le fait d'émettre la recommandation peut comprendre le fait d'émettre des recommandations de l'ensemble des recommandations candidates ayant une probabilité actualisée inférieure à une valeur seuil prédéterminée.

11. Un système informatique pour fournir une recommandation à un utilisateur par un système automatisé (24) ayant des conversations interactives avec l'utilisateur, le système informatique comprenant :

une mémoire stockant le code de programme exécutable par processeur ; et
un processeur pour exécuter le code de programme exécutable par processeur pour amener le système à exécuter le code de programme exécutable par processeur pour amener le système informatique à :

stocker, dans une base de données (10, 11), une pluralité de données de réponse de question (*question response data*) acquises à partir d'une pluralité d'utilisateurs antérieurs, sachant que la pluralité de données de réponse de question est indexée en association avec chacune d'une pluralité de questions et en association avec chacune d'une pluralité de recommandations, sachant qu'une base de données de fichier maître (*item master database*) (10) inclut la pluralité de questions, une pluralité d'articles, et un fichier maître (33) qui est construit pour stocker et indexer les questions et les articles en association avec des réponses aux questions sur la base de données de réponse de question acquises à partir de la pluralité d'utilisateurs précédents sur la base de la pluralité de questions et de la pluralité d'articles, et sachant qu'un fichier de données d'historique utilisateur (11) stocke un jeu de données (*data record*) d'historique utilisateur correspondant à chacun parmi une pluralité d'utilisateurs test et à la pluralité d'utilisateurs antérieurs ;
identifier un ensemble de recommandations candidates à partir de la pluralité de recommandations sur la base d'un premier critère prédéfini ;
répéter une pluralité de moyens jusqu'à ce qu'il soit déterminé qu'une condition prédéfinie est remplie, la pluralité de moyens incluant le fait de :

- sélectionner une question depuis la base de données (10, 11) sur la base d'un deuxième critère prédéfini,
- acquérir une réponse de l'utilisateur à la question sélectionnée par le moyen pour sélectionner une question,
- mettre à jour des probabilités de toutes les recommandations pour l'utilisateur sur la base de la réponse de l'utilisateur, et de

- mettre à jour l'ensemble des recommandations candidates sur la base des probabilités actualisées des recommandations, sachant que la mise à jour des probabilités de toutes les recommandations sur la base de la réponse de l'utilisateur comprend une estimation de Bayes; et à

émettre une recommandation sélectionnée parmi l'ensemble des recommandations candidates, dans le cas où l'on détermine que la condition prédéfinie est satisfaite.

12. Un produit programme informatique comprenant des instructions lisibles par ordinateur qui, lorsqu'elles sont chargées et exécutées sur un système approprié, exécutent les étapes d'un procédé, permettant de fournir une recommandation à un utilisateur par un système automatisé (24), d'après l'une des revendications précédentes 1 à 10.

# FIG. 1

AGENT SYSTEM 24

| | |
|---|---|
| ITEM PROBABILITY WORKTABLE INITIALIZATION UNIT ~1 | ITEM PROBABILITY WORKTABLE ~12 (WORKTABLE) |
| ITEM CANDIDATE SET SELECTION UNIT ~2 | |
| QUESTION SELECTION UNIT ~3 | |
| QUESTION PRESENTATION/ANSWER ACQUISITION UNIT ~4 | |
| ITEM PROBABILITY UPDATE UNIT ~5 | |
| ITEM PROBABILITY DETERMINATION UNIT ~6 | |
| ITEM PRESENTATION CONFIRMATION UNIT ~7 | |
| ITEM MASTER DATABASE CREATION/ UPDATE UNIT ~8 | USER HISTORY DATA FILE CREATION/ UPDATE UNIT ~9 |
| ITEM MASTER DATABASE ~10 | USER HISTORY DATA FILE ~11 |

# FIG. 2A

~ 31

QUESTION TABLE

| QUESTION ID | QUESTION INFORMATION |
|-------------|----------------------|
| QUESTION $\alpha$ | DO YOU ··· ? |
| QUESTION $\beta$ | ARE YOU ··· ? |
| ··· | ··· |

# FIG. 2B

~ 32

ITEM TABLE

| ITEM ID | ITEM INFORMATION | PRIOR PROBABJLITY |
|---------|------------------|-------------------|
| ITEM A | DO ···ING. | 0.02 |
| ITEM B | DO ···ING. | 0.01 |
| ··· | ··· | ··· |

# FIG. 2C

~ 33

ITEM MASTER

| ITEM ID | QUESTION $\alpha$ | QUESTION $\beta$ | QUESTION $\gamma$ | ··· |
|---------|----------|---------|----------|-----|
| ITEM A | YES | NO | YES | ··· |
| ITEM B | NO | NO | NO | ··· |
| ITEM C | YES | YES | YES | ··· |
| ··· | | | ··· | |

# FIG. 2D

~ 34

LIKELIHOOD-OF-QUESTION-FOR-ITEM TABLE

| ITEM ID | QUESTION $\alpha$ | | | QUESTION $\beta$ | | | ··· |
|---------|------|------|---------|------|------|---------|-----|
| | YES | NO | NEITHER | YES | NO | NEITHER | |
| ITEM A | 0.6 | 0.3 | 0.1 | 0.3 | 0.6 | 0.1 | ··· |
| ITEM B | 0.2 | 0.7 | 0.1 | 0.2 | 0.6 | 0.2 | ··· |
| ITEM C | 0.7 | 0.2 | 0.1 | 0.5 | 0.3 | 0.2 | ··· |
| ··· | ··· | ··· | ··· | ··· | ··· | ··· | ··· |

$P(\alpha_{YES}|X)$  $P(\alpha_{NO}|X)$  $P(\alpha_{NEITHER}|X)$  $P(\beta_{YES}|X)$  $P(\beta_{NO}|X)$  $P(\beta_{NEITHER}|X)$

# FIG. 3A

~11

USER HISTORY DATA FILE

| USER ID | QUESTION $\alpha$ | QUESTION $\beta$ | ··· | | ITEM A | ITEM B | ITEM C | ITEM D |
|---------|------------------|-----------------|-----|---|--------|--------|--------|--------|
| USER001 | YES | NO | ··· | | (1) YES | | | |
| USER001 | YES | NO | ··· | | | | (1) YES | |
| USER002 | NO | YES | ··· | | (1) YES | | | |
| USER002 | NO | YES | ··· | | | (1) YES | | |
| USER003 | NO | NO | ··· | | | | | (1) YES |
| ··· | ··· | ··· | ··· | ··· | ··· | ··· | ··· | ··· |
| | | | | | | | | |
| | | | | | | | | |

# FIG. 3B

~12

ITEM PROBABILITY WORKTABLEUSER HISTORY DATA FILE

| USER ID | ITEM ID | POSTERIOR PROBABILITY |
|---------|---------|----------------------|
| USER 001 | ITEM A | 0.04 |
| USER 001 | ITEM B | 0.03 |
| USER 001 | ITEM C | 0.05 |
| USER 001 | ··· | ··· |

EP 2 885 755 B1

# FIG. 4

```
        21                           21
   CLIENT                       CLIENT
   TERMINAL                     TERMINAL


                                        22


                                             23
                            ADMINISTRATOR
                            TERMINAL
                   24
        AGENT SYSTEM
```

FIG. 5A

> QUESTION 3:
>
> DO YOU LIKE EXERCISE?

| YES | NO | NEITHER |

USER SELECTS ANSWER; HERE FROM YES/NO/NEITHER.

FIG. 5B

> QUESTION 4:
>
> WHEN YOU NEED TO DO SOMETHING IN A WEEK, HOW DO YOU COMPLETE THE TASK? SELECT "YES" IF YOU PLAN DAY-BY-DAY SMALL STEPS, OR "NO" IF YOU COMPLETE IN ONE WHOLE STEP.

| YES | NO | NEITHER |

IN THE PREVIOUS PAGE, THE USER SELECT "NO".

FIG. 5C

RECOMMENDATIONS AS FOLLOWS

| ·CONSCIOUSLY BREATHE FROM THE YOUR ABDOMEN(0.30) |
| ·USE STAIRCASE(0.18) |
| ·WALKING (0.18) |
| ·HOUSEKEEPING AS EXERCISE (0.14) |
| ·15-MINS EXERCISE / STRETCH(0.05) |

# FIG. 6

PREPARING A PLURALITY OF ITEMS AS THE ITEM TABLE 32 IN ADVANCE, AND A PLURALITY OF QUESTIONS AS THE QUESTION TABLE 31 IN ADVANCE. ~S101

↓

ASKING A LOT OF TEST USERS QUESTIONS FOR THE PURPOSE OF ASSOCIATING THE PLURALITY OF QUESTIONS WITH THE PLURALITY OF ITEMS. ~S102

↓

GENERATING THE USER HISTORY DATA RECORD, BASED ON THE ANSWERS OBTAINED FROM EACH USER AND STORING IT INTO THE USER HISTORY DATA FILE 11. ~S103

↓

CALCULATING A LIKELIHOOD P $(\alpha \mid A)$ OF EACH QUESTION A FOR EACH ITEM A BY INPUTTING THE RECORD OF THE USER HISTORY DATA FILE 11. ~S104

↓

STORING THE LIKELIHOOD P $(\alpha \mid A)$ INTO THE LIKELIHOOD-OF-QUESTION-FOR-ITEM TABLE 34. ~S105

↓

DETERMINING THE YES-OR-NO RELATIONSHIP OF EACH ITEM AND EACH QUESTION, BASED ON THE LIKELIHOOD P $(\alpha \mid A)$ AND STORING IT INTO THE ITEM MASTER 33. ~S106

# 1. SELECT AND ASK QUESTION

| PICK UP CANDIDATES > | SELECT QUESTION > | 2. ANSWER BY USER & 3.PROBABILITY ESTIMATION > |
|---|---|---|
| PICK UP CANDIDATES IN THE TOP 50% CUMULATIVE PROBABILITY OF TOTAL | SELECT THE QUESTION YOU WANT TO DIVIDE THE CANDIDATES(IN ORDER TO APPROACH THE ANSWER ACCURATELY WITHOUT REWORK IS TO DIVIDE) | PRESENTS A QUESTION THAT HAS BEEN CHOSEN, BASED ON THE CALCULATED PROBABILITY OF USER RESPONSE |

**LOGIC**

HIGH  CANDIDATES  PROBABILITY

| CANDIDATES | PROBABILITY |
|---|---|
| ITEM A | 5% |
| ITEM B | 4% |
| ITEM C | 4% |
| ITEM D | 3% |
| ⋮ | |
| ITEM N | 3% |
| ITEM Z | 0.1% |

PROBABILITY

CUMULATIVE PROBABILIT Y 50%

LOW  THE FIRST QUESTION USING THE PRIOR PROBABILITY CALCULATED FROM PAST TRENDS

| | ANSWER | CANDIDATES | TOTAL ITEM | |
|---|---|---|---|---|
| QUESTION A | YES | ITEM A C ⋯N | 7ITEM | GOOD →ASK THIS QUSTION |
| | NO | ITEM B D ⋯M | 8ITEM | |
| QUESTION B | YES | ITEM C ⋯L | 3ITEM | NOT GOOD |
| | NO | ITEM A B D ⋯M N | 12ITEM | |

⋮

GOOD QUESTION IS THE ONE THAT HAS THE HIGHEST VARIANCE.

QUESTION α USERANS. 「NO」 ⟹

HIGH  CANDIDATES  PROB-ABILITY

| CANDIDATES | PROB-ABILITY |
|---|---|
| ITEM B | 7% |
| ⋮ | |
| ITEM M | 5% |
| ⋮ | |
| ITEM Z | 3% |
| ITEM A | 1% |
| ⋮ | |
| ITEM Y | 0.1% |

PROBABILITY

LOW

"YES" GROUP WILL DECREASE PROBABILITY RATIO ↓

"NO" GROUP WILL INCREASE PROBABILITY RATIO ↑

**IMAGE**

GOOD QUESTION QUESTION α

NOT GOOD QUESTION QUESTION β

GOOD QUESTION QUESTION α

EP 2 885 755 B1

FIG. 7

## 4. FIND THE ANSWER(S)?

PRESENTS AN ITEM THAT HAS BEEN CHOSEN, BASED ON THE CALCULATED PROBABILITY OF USER RESPONSE

LOGIC

HIGH CANDIDATES PROBABILITY **EXAMPLE OF THE CONDITIONS**

PROBABILITY

| ITEM B | 7% |
| ITEM M | 5% |
| ITEM Z | 3% |
| ITEM A | 1% |
| ITEM Y | 0.1% |

PROBABILITY FOR THE 1st LIKELY ITEM IS TWICE THAN 2nd ONE.

PROBABILITY FOR THE 1ST LIKELY ITEM IS MORE THEN 50%.

LOW

NOT FOUND THE ANSWER(S) YET.

IMAGE

GOOD QUESTION QUESTION α

°Y    °A    °C    °B

1ST PROBABILITY ITEM

## 1. SELECT AND ASK QUESTION

RE-PICK UP CANDIDATES

RE-SELECT QUESTION

2. ANSWER BY USER & 3. PROBABILITY ESTIMATION

REPEAT FROM PICKING UP THE ITEM IN THE TOP 50% CUMULATIVE PROBABILITY OF TOTAL

HIGH CANDIDATES PROBABILITY

PROBABILITY

| ITEM B | 7% |
| ITEM M | 5% |
| ITEM Z | 3% |
| ITEM A | 1% |
| ITEM Y | 0.1% |

CUMULATIVE PROBABILITY 50%

···REPEATED UNTIL AN ANSWER IS DETERMINED

LOW

OLD TOP50% GROUP

°Y    °A    °C    °B    °Z

NEW TOP50% GROUP

# FIG. 8

EP 2 885 755 B1

LOGIC

**SELECT QUESTION**

SELECT THE QUESTION YOU WANT TO DIVIDE THE CANDIDATES (IN ORDER TO APPROACH THE ANSWER ACCURATELY WITHOUT REWORK )

| | ANSWER | CANDIDATES | TOTAL ITEM |
|---|---|---|---|
| QUESTION α | YES | ITEM A C ···N | 7 ITEMS |
| | NO | ITEM B D ···M | 8 ITEMS |
| QUESTION γ | YES | ITEM A C ···M | 7 ITEMS |
| | NO | ITEM B D ··· N | 8 ITEMS |

WE CAN NOT CHOOSE BECAUSE BOTH OF THEM HALVES

**+ADD CONDITION**

NOT TO CUT RATHER THAN A GENERAL, BUT TO CUT FOR THE CANDIDATES, SEEN AS A WHOLE, CHOOSE A QUESTION THAT DOES NOT CUT IN HALF

| | ANSWER | ALL ITEM (WITHIN CANDIDATES) | TOTAL ITEM |
|---|---|---|---|
| QUESTION α | YES | ITEM A C ···N ···Z | 10 ITEMS |
| | NO | ITEM B D ···M ···Y | 20 ITEMS |
| QUESTION γ | YES | ITEM A C ···M ···Z | 15 ITEMS |
| | NO | ITEM B D··· N ···Y | 15 ITEMS |

GOOD →USE

NOT GOOD

THE GAP IS LARGE ENOUGH, IT IS NOT GENERALLY DETERMINED QUESTIONS FOR CANDIDATE

IMAGE

GOOD QUESTION QUESTION α

°Y  °C  A° °B  °Z

GOOD QUESTION QUESTION γ

GOOD QUESTION QUESTION α

°Y  °C  A° °B  °Z

NOT GOOD QUESTION QUESTION γ

FIG. 9

# FIG. 10

ALL THE ITEMS

NOT GOOD QUESTION

ITEMS WITHIN 50% CUMULATIVE
PROBABILITY AT SOME POINT

GOOD
QUESTION

ITEMS WITHIN 50% CUMULATIVE
PROBABILITY AT NEXT TIMING

ITEMS OUTSIDE THE CANDIDATES AT
SOME POINT MIGHT COME BACK TO
WITHIN THE CANDIDATES.

EP 2 885 755 B1

# FIG. 11

| 1. SELECT AND ASK QUESTION | 2. ANSWER BY USER | 3. PROBABILITY ESTIMATION | 4. FIND THE ANSWER(S)? |
|---|---|---|---|
| ·SELECT A QUESTION WHICH DIVIDES THE CANDIDATES AS HALF AS POSSIBLE: CANDIDATES ARE DEFINED AS WHICH ARE WITHIN THE XX% CUMULATIVE PROBABILITY. ·BESIDES, WE ALSO TRY TO SELECT A QUESTION WHICH GETS MORE IMPORTANCE WHEN THE ITEMS ARE LIMITED TO THE CANDIDATES. | SHOW CANDIDATES OF THE ANSWER FOR THE QUESTION AND GET THE ANSWER FROM USER. | CALCULATE THE PROBABILITY WHICH EACH ITEM IS LIKELY THE USER'S FAVORITE BY BAYES ESTIMATION. | JUDGE WHETHER PARTICULAR ITEM(S) ARE LIKELY ENOUGH OR NOT. THE CONDITIONS CAN BE SET ARBITRARILY: ·PROBABILITY FOR THE 1ST LIKELY ITEM IS TWICE THAN 2ND ONE. ·PROBABILITY FOR THE 1ST LIKELY ITEM IS MORE THEN 50%. ·ETC··· |

Yes → SHOW THE ANSWER(S) TO USER

INCORRECT / NOT APPLICABLE

CORRECT / APPLICABLE

NOT FOUND YET

THIS VALUE IS VARIABLE.
WE CURRENTLY USE 50%.

## 5. UPDATE ITEM MASTER DATABASE

UPDATE ITEM MASTER DATABASE BASED ON THE HISTORICAL DATA.

EP 2 885 755 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7783486 B
- RU 2010149779
- US 7206965 B

- US 6442542 B
- EP 2274699 A

**Non-patent literature cited in the description**

- **GUY SHANI et al.** Establishing User Profiles in the MediaScout Recommender System. *COMPUTATIONAL INTELLIGENCE AND DATA MINING,* 2007